# EUROPEAN PATENT APPLICATION

(11) **EP 4 738 082 A1**
(43) Date of publication of application: **06.05.2026**
(21) Application number: 25173759.9
(22) Date of filing: 30.04.2025
(51) Int. Cl.: G06F 3/0481, G06F 3/04886

(54) **DISPLAY METHOD AND DEVICE, ELECTRONIC DEVICE, AND STORAGE MEDIUM**

(30) Priority: 29.10.2024 CN 202411524360
(71) Applicant: Beijing Xiaomi Mobile Software Co., Ltd., Beijing 100085 (CN)
(72) Inventor: LUO, Ruiyao, 100085 Beijing (CN); TANG, Han, 100085 Beijing (CN); LI, Xiaodong, 100085 Beijing (CN); ZHANG, Baoliang, 100085 Beijing (CN); XIA, Fan, 100085 Beijing (CN); MEI, Jianhua, 100085 Beijing (CN); WANG, Xiangyu, 100085 Beijing (CN); YU, Kean, 100085 Beijing (CN); DAI, Chen, 100085 Beijing (CN)
(74) Representative: Dehns Germany Partnerschaft mbB

(57) **Abstract**

The present disclosure relates to a display method and device, an electronic device, a storage medium and a program product. The display method includes: in response to detecting a zoom-in display instruction, obtaining an element type of an interface element included in an initial interface to be zoomed in and displayed; for each interface element, determining a layout style of the interface element in a zoomed-in interface based on the element type of the interface element, wherein the layout style includes a display style and/or a display position of the interface element in the zoomed-in interface; and drawing and displaying the zoomed-in interface based on layout styles of all interface elements in the zoomed-in interface. Embodiments of the present disclosure can improve the level of detail of the interface display of the electronic device, improve the display effect of the electronic device, and enhance the user experience.

## Description

### TECHNICAL FIELD

The present disclosure relates to the field of display technologies, and in particular to a display method and device, an electronic device, a storage medium and a program product.

### BACKGROUND

As smart electronic devices enter every corner of people's lives, functions of electronic devices such as mobile phones are becoming increasingly abundant. However, due to the limited screen space of the mobile phones, special groups of people may not be able to see fonts displayed on the screen clearly, resulting in the problem that the functions of the mobile phones cannot be used.

At present, the interface display on the mobile phone screen can usually be automatically adjusted by adjusting a font size displayed on the mobile phone, so that the special groups of people can see the fonts displayed on the screen clearly. However, this method still has poor display effect and poor user experience.

### SUMMARY

In order to overcome the problems existing in the related arts, the present disclosure provides a display method and device, an electronic device, a storage medium and a program product, which can improve the level of detail of the interface display of the electronic device and improve the display effect of the electronic device to improve the user experience.

According to a first aspect of embodiments of the present invention, there is provided a display method, at least including:
in response to detecting a zoom-in display instruction, obtaining an element type of an interface element included in an initial interface to be zoomed in and displayed;
for each interface element, determining a layout style of the interface element in a zoomed-in interface based on the element type of the interface element, wherein the layout style includes a display style and/or a display position of the interface element in the zoomed-in interface; and
drawing and displaying the zoomed-in interface based on layout styles of all interface elements in the zoomed-in interface.

According to a second aspect of embodiments of the present invention, there is provided a display device, at least including:
an obtaining module, configured to obtain an element type of an interface element included in an initial interface to be zoomed in and displayed, in response to detecting a zoom-in display instruction;
a determination module, configured to, for each interface element, determine a layout style of the interface element in a zoomed-in interface based on the element type of the interface element, wherein the layout style includes a display style and/or a display position of the interface element in the zoomed-in interface; and
a display module, configured to draw and display the zoomed-in interface based on layout styles of all interface elements in the zoomed-in interface.

According to a third aspect of embodiments of the present invention, there is provided an electronic device, at least including:
a processor; and
a memory configured to store a computer program or instructions;
wherein the processor executes the computer program or the instructions to implement steps of the method described in the first aspect.

According to a fourth aspect of embodiments of the present invention, there is provided a non-transitory computer-readable storage medium having a computer program or instructions stored thereon, wherein the computer program or the instructions in the storage medium, when executed by a processor, implements steps of the method described in the first aspect.

According to a fifth aspect of embodiments of the present invention, there is provided a computer program product, including a computer program or instructions, which, when executed by a processor, implements steps of the method described in the first aspect.

The technical solution provided by the embodiments of the present disclosure may have the following beneficial effects:
the display method provided by embodiments of the present disclosure is different from the related art in which only the text part in the screen interface is enlarged. In the embodiments of the present disclosure, when the zoom-in display instruction is detected, the layout style of each interface element in the zoomed-in interface can be determined through the element type of each interface element in the initial interface to be zoomed in and displayed, so that the zoomed-in interface can be drawn and displayed according to the layout styles of all interface elements in the zoomed-in interface. On the one hand, the display of the zoomed-in interface can be made more harmonious, and on the other hand, all the interface elements can be displayed in the zoomed-in interface, that is, respective interface elements can be displayed more completely after the zoomed-in display, without omitting any interface element from the initial interface in the zoomed-in interface, thereby improving the level of detail of the interface display of the electronic device and improving the display effect of the electronic device to enhance the user experience.

It should be noted that the above general description and the following detailed description are merely exemplary and explanatory and should not be construed as limiting of the disclosure.

### BRIEF DESCRIPTION OF THE DRAWINGS

The accompanying drawings here, which are incorporated in and constitute a part of this specification, illustrate embodiments consistent with the present disclosure and, together with the description, serve to explain principles of the present disclosure.
FIG. 1 shows a schematic flowchart of a display method according to an embodiment of the present disclosure.
FIG. 2 shows a schematic layout diagram of a traditional electronic device according to an embodiment of the present disclosure.
FIG. 3 shows a schematic diagram of different zoom-in ratios in a display method according to an embodiment of the present disclosure.
FIG. 4a and FIG. 4b show schematic diagrams of interface elements of different element types corresponding to different zoom-in ratios in a display method according to an embodiment of the present disclosure.
FIG. 5a and FIG. 5b show schematic diagrams of an option box and an input box corresponding to different zoom-in ratios in a display method according to an embodiment of the present disclosure.
FIG. 6 shows a schematic diagram of list elements corresponding to different zoom-in ratios in a display method according to an embodiment of the present disclosure.
FIG. 7a to FIG. 7e show schematic diagrams of combinations of interface elements of different area types in a display method according to an embodiment of the present disclosure.
FIG. 8 shows a schematic diagram of zooming out a zoomed-in interface in a display method according to an embodiment of the present disclosure.
FIG. 9 shows a structural block diagram of a display device according to an embodiment of the present disclosure.
FIG. 10 shows a schematic structural diagram of an electronic device according to an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following description of the embodiments do not represent all implementations consistent with the present disclosure. Instead, they are merely examples of devices and methods consistent with some aspects related to the present disclosure as recited in the appended claims.

The technical solutions provided by various embodiments of the present disclosure are described in detail below in conjunction with the accompanying drawings.

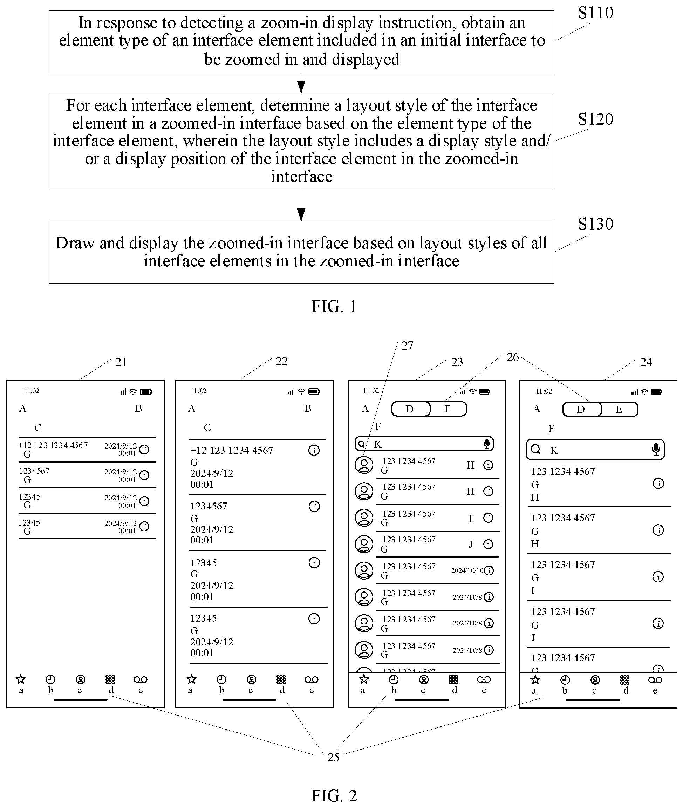

FIG. 1 shows a schematic flowchart of a display method according to an embodiment of the present disclosure. As shown in FIG. 1, the display method mainly includes steps S110 to S130.

In the S110, in response to detecting a zoom-in display instruction, an element type of an interface element included in an initial interface to be zoomed in and displayed is obtained.

In the S120, for each interface element, a layout style of the interface element in a zoomed-in interface is determined based on the element type of the interface element, and the layout style includes a display style and/or a display position of the interface element in the zoomed-in interface.

In the S130, the zoomed-in interface is drawn and displayed based on layout styles of all interface elements in the zoomed-in interface.

In embodiments of the present disclosure, the display method can be applied to an electronic device. Here, the electronic device may include: a terminal device, for example, a mobile terminal or a fixed terminal. The mobile terminal may include: a mobile phone, a tablet computer, a laptop computer, a wearable electronic devices or the like. The fixed terminal may include a desktop computer, a smart TV, a vehicle-mounted device, etc., which are not limited in the embodiments of the present disclosure.

In the step S110, when the electronic device detects the zoom-in display instruction, it can obtain the element type of the interface element included in the initial interface to be zoomed in and displayed, so as to determine the layout style of the interface element in the zoomed-in interface according to the element type of the interface element in a subsequent process and display it.

Here, the zoom-in display instruction may be a voice instruction or a manual operation instruction received by the electronic device, and may be used to indicate that the initial interface of the electronic device needs to be zoomed-in and displayed.

In embodiments of the present disclosure, the initial interface may be a screen interface displayed by the electronic device before the zoom-in display instruction is detected. The interface element may be software that meets interaction requirements in the initial interface displayed by the electronic device or an element that meets user interaction requirements included in the initial interface.

It should be noted that the element type of the interface element may refer to various components and controls used to construct and present an interactive interface in the interface design of the electronic device, which is not limited by embodiments of the present disclosure. For example, the element type of the interface element may include, but is not limited to: a title bar, a navigation bar, a menu bar, a toolbar, an option box, an input box, or a control element.

It should be understood that, when the electronic device detects the zoom-in display instruction, it can first determine each interface element in the initial interface to be zoomed in and displayed, and then determine the element type of each interface element.

It should be noted that interface elements of different element types have different functions and uses, and can provide the user with a variety of means to interact with the screen interface of the electronic device. For example, the control element may be used to trigger a specific operation, the input box may be used to receive a user input, the menu bar may be used to select a predefined option, etc.

In the steps S120 to S130, the electronic device may determine, based on the element type of each interface element, the layout style (such as the display style and/or display position) of each interface element in the zoomed-in interface, and draw and display the zoomed-in interface based on layout styles of all interface elements in the zoomed-in interface to complete the zoomed-in display of the initial interface.

Here, the layout style of the interface element in the zoomed-in interface may include the display style and/or the display position of the interface element in the zoomed-in interface. The display style of the interface element in the zoomed-in interface may include but is not limited to: the color, font, size, shape or border of the interface element in the zoomed-in interface.

It should be understood that interface elements of different element types have different layout styles in the zoomed-in interface. The electronic device can determine the layout style of each interface element in the zoomed-in interface by the element type of each interface element so as to enable the display of all interface elements in the zoomed-in interface.

In embodiments of the present disclosure, the layout style of the interface element in the zoomed-in interface can be determined based on the element type of the interface element, a layout style of the interface element in the initial interface, and a preset zoom-in ratio associated with the zoom-in display instruction. When the interface element is a control element, a layout style of the control element in the zoomed-in interface can also be determined based on a control type of the control element.

It should be noted that interface elements of different element types can be enlarged and displayed at the preset zoom-in ratio in the zoomed-in interface, or display styles and/or display positions of the interface elements of different element types can remain unchanged in the zoomed-in interface, which is not limited in embodiments of the present disclosure.

In the related arts, in general, a traditional electronic device such as a mobile phone can automatically adjust a layout of a User Interface (UI) by a font size to display more text. As shown in FIG. 2, 21 indicates a UI display effect of a voice mailbox when the layout set by the system by default in the existing mobile phone is 100%, 22 indicates the UI display effect of the voice mailbox when the current layout set by the system in the existing mobile phone is 150%, 23 indicates a UI display effect of the recent call when the layout set by the system by default in the existing mobile phone is 100%, and 24 indicates the UI display effect of the recent call when the layout set by the system in the existing mobile phone is 150%. Referring to FIG. 2, this adjustment method does not take into account the problem that some elements in the user interface are not zoomed-in or are missing. For example, a bottom navigation bar 25 and a top category switcher (e.g., tab bar) 26 in FIG. 2 are not zoomed-in, and an avatar 27 in the recent call is missing after the font size is zoomed-in, resulting in poor display effect and poor user experience.

In contrast, the display method provided by embodiments of the present disclosure is different from the related art in which only the text part in the screen interface is enlarged. In the embodiments of the present disclosure, when the zoom-in display instruction is detected, the layout style of each interface element in the zoomed-in interface can be determined through the element type of each interface element in the initial interface to be zoomed in and displayed, so that the zoomed-in interface can be drawn and displayed according to the layout styles of all interface elements in the zoomed-in interface. On the one hand, the display of the zoomed-in interface can be made more harmonious, and on the other hand, all the interface elements can be displayed in the zoomed-in interface, that is, respective interface elements can be displayed more completely after the zoomed-in display, without omitting any interface element from the initial interface in the zoomed-in interface, thereby improving the level of detail of the interface display of the electronic device and improving the display effect of the electronic device to enhance the user experience.

In some embodiments, determining the layout style of the interface element in the zoomed-in interface based on the element type of the interface element in the step S120 includes:
determining the layout style of the interface element in the zoomed-in interface based on the element type of the interface element and a layout style of the interface element in the initial interface, and a preset zoom-in ratio associated with the zoom-in display instruction.

In an embodiment of the present disclosure, the electronic device can determine the layout style of the interface element in the zoomed-in interface based on the element type of the interface element and the layout style of the interface element in the initial interface, and the preset zoom-in ratio associated with the zoom-in display instruction, so as to draw and display the zoomed-in interface in the subsequent process according to the layout styles of all the interface elements in the zoomed-in interface.

Here, the layout style of the interface element in the initial interface may include the display style and/or the display position of the interface element in the initial interface.

The preset zoom-in ratio may be a ratio parameter carried in the zoom-in display instruction, or a ratio parameter associated with the zoom-in display instruction determined by the electronic device from a preset ratio library according to the detected zoom-in display instruction. The preset ratio library may be preset in the electronic device.

It should be understood that different layout styles of interface elements of different element types in the zoomed-in interface can be determined according to their layout styles in the initial interface and the preset zoom-in ratio, so as to prepare for the subsequent display of all the interface elements in the zoomed-in interface.

In some embodiments, the electronic device may adjust the layout style of the interface element in the zoomed-in interface when the preset zoom-in ratio associated with the detected zoom-in display instruction is greater than a preset ratio threshold. The preset ratio threshold may be preset by the electronic device according to actual application conditions. For example, the preset ratio threshold may be 150% or 170%.

For example, as shown in Table 1, the main text of the interface of the electronic device can be enlarged 2 times, to a system-set font size level and enlargement strategies corresponding to different font sizes under each level. The system default font size level of the electronic device is 100%, and a layout corresponding to a font size level of 90% to 145% is a standard layout, and a layout corresponding to a font size level of 170% to 200% is a large font layout.

**Table 1**

| Level Name | | 200% | 170% | 145% | 125% | 110% | 100% | 90% |
|---|---|---|---|---|---|---|---|---|
| Font Size | Greater than or equal to 35 font size | 1 times | | | | | | |
| | 19 to 34 font size | 1.5 times | | 1.45 times | 1.25 times | 1.1 times | 1.0 times | 0.9 times |
| | Less than or equal to 18 font size | 2.0 times | 1.7 times | | | | | |
| Layout | | Large font layout | | Standard layout | | | | |

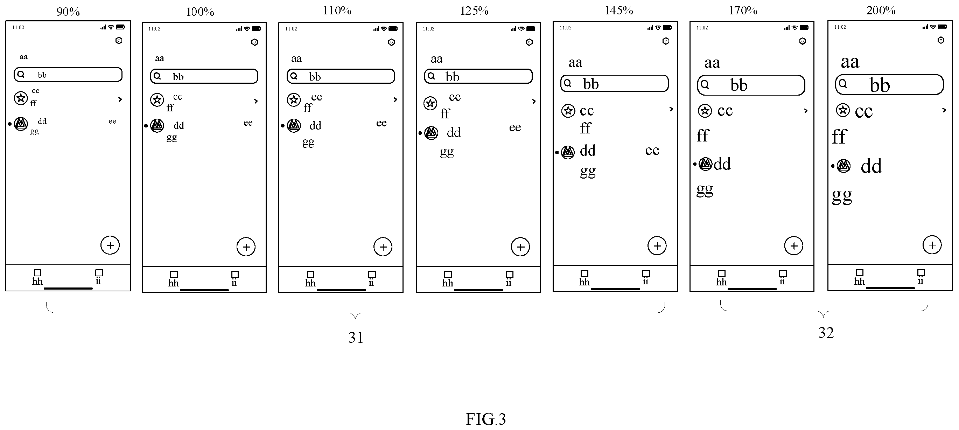

As shown in FIG. 3, taking 170% as a breakpoint of the layout change as an example, 31 indicates the standard layout with the font size level less than 170%, and 32 indicates the large font layout with the font size level greater than 170%. In this case, the interface element can adopt a new layout style in the zoomed-in interface.

In embodiments of the present disclosure, the layout style of the interface element in the zoomed-in interface can be determined by the element type of the interface element and the layout style of the interface element in the initial interface, as well as the preset zoom-in ratio associated with the zoom-in display instruction, thereby preparing for the subsequent drawing and display of the zoomed-in interface according to the layout styles of all the interface elements in the zoomed-in interface, so that all the interface elements can be displayed in the zoomed-in interface, thereby improving the level of detail of the interface display of the electronic device and enhancing the display effect of the electronic device.

In some embodiments, determining the layout style of the interface element in the zoomed-in interface based on the element type of the interface element and the layout style of the interface element in the initial interface, and the preset zoom-in ratio associated with the zoom-in display instruction includes:
in response to the interface element being a navigation bar, and the navigation bar being located at bottom and in a vertical layout in the initial interface, enlarging text in the navigation bar in the zoomed-in interface based on the preset zoom-in ratio, and determining the first number of lines of the text in the navigation bar in the zoomed-in interface based on the preset zoom-in ratio, wherein the first number of lines is greater than or equal to the number of lines of the text in the navigation bar displayed in the initial interface;
in response to the interface element being the navigation bar, and the navigation bar being located at the bottom and in a horizontal layout in the initial interface, enlarging the text in the navigation bar in the zoomed-in interface based on the preset zoom-in ratio, and determining the number of lines of the text in the navigation bar displayed in the zoomed-in interface to remain unchanged; and
in response to the interface element being the navigation bar, and the navigation bar being located at a side of the initial interface, enlarging the navigation bar in the zoomed-in interface based on the preset zoom-in ratio.

In an embodiment of the present disclosure, when the interface element is the navigation bar, and the navigation bar is located at the bottom and in the vertical layout in the initial interface, the electronic device can enlarge, based on the preset zoom-in ratio, the text in the navigation bar in the zoomed-in interface, and determine, based on the preset zoom-in ratio, the first number of lines of the text in the navigation bar in the zoomed-in interface. When the interface element is the navigation bar, and the navigation bar is located at the bottom and in the horizontal layout in the initial interface, the electronic device can enlarge, based on the preset zoom-in ratio, the text in the navigation bar in the zoomed-in interface, and determine the number of lines of the text in the navigation bar displayed in the zoomed-in interface to remain unchanged. When the interface element is the navigation bar, and the navigation bar is located at the side of the initial interface, the electronic device can enlarge the navigation bar in the zoomed-in interface based on the preset zoom-in ratio, so as to draw and display various navigation bars in the zoomed-in interface according to layout styles of the navigation bars in the zoomed-in interface.

Here, the navigation bar can be an interface element in the UI interface of the electronic device for guiding the user to browse and access different pages or functional areas. The navigation bar can be located at the bottom or side of the UI interface. The navigation bar can be in the vertical layout or in the horizontal layout in the UI interface to display links or buttons of various parts of the UI interface in a clear and intuitive way.

It should be noted that the navigation bar being in the vertical layout in the initial interface may mean that the icon and the text in the navigation bar can be displayed in a vertical layout style, and the navigation bar being in the horizontal layout in the initial interface may mean that the icon and the text in the navigation bar can be displayed in a horizontal layout style.

It can be understood that when the navigation bar is located at the bottom of the initial interface and is in the vertical layout in the initial interface, the text in the navigation bar can be enlarged in the zoomed-in interface according to the preset zoom-in ratio, and a layout style of an icon in the navigation bar can remain unchanged in the zoomed-in interface, and the first number of lines of the text in the navigation bar in the zoomed-in interface can be determined based on the preset zoom-in ratio. In this case, the first number of lines can be greater than or equal to the number of lines of the text in the navigation bar displayed in the initial interface, that is, the text in the navigation bar can support line wrapping in the zoomed-in interface.

It should be noted that the first number of lines can be set according to the amount of text in the navigation bar in the actual application scenario, which is not limited by embodiments of the present disclosure. For example, the first number of lines can be one line, two lines, or three lines.

In some embodiments, when the preset zoom-in ratio is greater than the preset ratio threshold, due to the limited screen space of the electronic device, the first number of lines of the text in the navigation bar in the zoomed-in interface can be set to two lines, and the text exceeding two lines can be omitted or scrolled, etc., so as to effectively improve the rationality of the layout of each interface element in the zoomed-in interface.

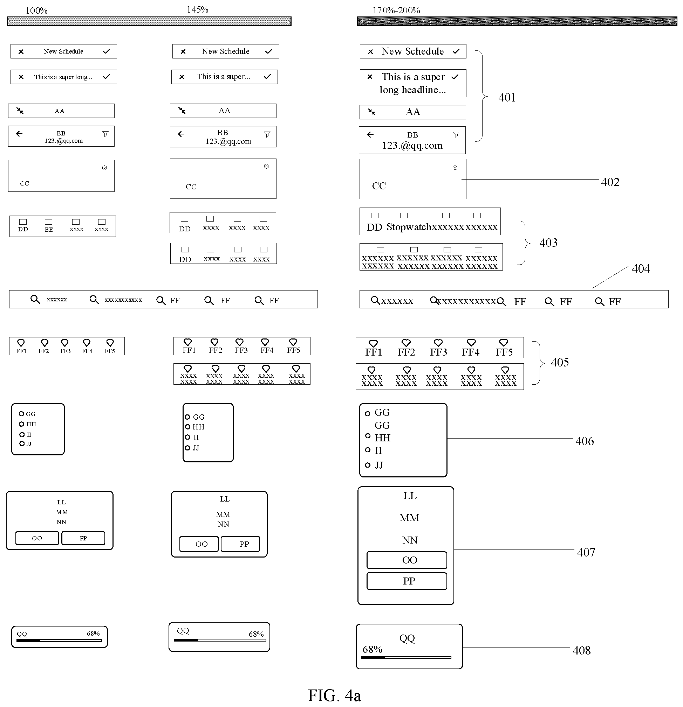

For example, as shown in FIG. 4a, 403 indicates that the navigation bar is located at the bottom of the initial interface and is in the vertical layout in the initial interface. When the preset zoom-in ratio is 170%, the font size of the text in the navigation bar corresponding to the preset zoom-in ratio of 170% may be 16 device independent pixels (dp), that is, the font size of the text in the navigation bar may be fixed to 16dp in the zoomed-in interface. When the preset zoom-in ratio is 200%, the font size of the text in the navigation bar corresponding to the preset zoom-in ratio of 200% may be 16dp or 18dp, that is, the font size of the text in the navigation bar in the zoomed-in interface may be kept consistent with the font size (i.e., 16dp) at the preset zoom-in ratio of 170%, or the font size of the text in the navigation bar may be fixed to 18dp in the zoomed-in interface.

When the navigation bar is located at the bottom of the initial interface and is in the horizontal layout in the initial interface, the text in the navigation bar can be enlarged in the zoomed-in interface according to the preset zoom-in ratio, and the layout style of the icon in the navigation bar can remain unchanged in the zoomed-in interface. In addition, it can be determined that the number of lines of the text in the navigation bar displayed in the zoomed-in interface remains unchanged, that is, the text in the navigation bar does not support line wrapping in the zoomed-in interface.

For example, as shown in FIG. 4a, 404 indicates that the navigation bar is located at the bottom of the initial interface and is in the horizontal layout in the initial interface. When the preset zoom-in ratio is 170%, the font size of the text in the navigation bar can be fixed to 16 dp in the zoomed-in interface. When the preset zoom-in ratio is 200%, the font size of the text in the navigation bar in the zoomed-in interface can be kept consistent with the font size (i.e., 16dp) at the preset zoom-in ratio of 170%, or the font size of the text in the navigation bar can be fixed to 18dp, etc. in the zoomed-in interface.

When the navigation bar is located on the side of the initial interface, regardless of whether the navigation bar is in the vertical layout or the horizontal layout in the initial interface, the navigation bar can be enlarged in the zoomed-in interface according to the preset zoom-in ratio. In this case, the icon and the text in the navigation bar can be enlarged and displayed in the zoomed-in interface, or the text in the navigation bar can be enlarged and displayed in the zoomed-in interface, while the layout style of the icon in the navigation bar can remain unchanged in the zoomed-in interface.

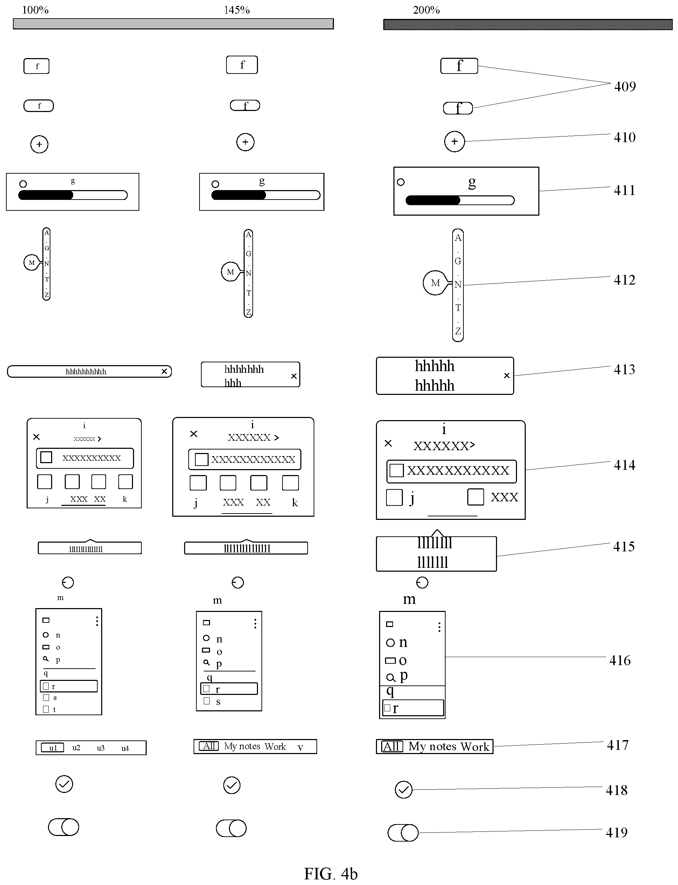

For example, as shown in FIG. 4b, 416 indicates that the navigation bar is located on the side of the initial interface, i.e., the side navigation bar. When the preset zoom-in ratio is 145%, the text in the navigation bar can be enlarged 1.45 times in the zoomed-in interface. When the preset zoom-in ratio is 200%, the text in the navigation bar can be enlarged 2 times, etc. in the zoomed-in interface.

In embodiments of the present disclosure, different layout styles of various navigation bars in the zoomed-in interface can be determined by different layout styles of the various navigation bars in the initial interface, thereby preparing for the subsequent drawing and display of the various navigation bars in the zoomed-in interface according to the layout styles of the navigation bars in the zoomed-in interface, so that all the interface elements can be better displayed in the zoomed-in interface, thereby improving the level of detail of the interface display of the electronic device and better enhancing the display effect of the electronic device.

In some embodiments, the display method further includes:
in response to the navigation bar being located at the bottom and in the vertical layout in the initial interface, determining a display height of the navigation bar in the zoomed-in interface based on the preset zoom-in ratio; and
in response to the navigation bar being located at the bottom and in the horizontal layout in the initial interface, determining a spatial distance between respective functional options in the navigation bar based on the preset zoom-in ratio.

In an embodiment of the present disclosure, when the navigation bar is located at the bottom and in the vertical layout in the initial interface, the electronic device can determine the display height of the navigation bar in the zoomed-in interface based on the preset zoom-in ratio, and when the navigation bar is located at the bottom and in the horizontal layout in the initial interface, the electronic device can determine the spatial distance between the respective functional options in the navigation bar based on the preset zoom-in ratio.

Here, the display height of the navigation bar in the zoomed-in interface may refer to the spacing between upper and lower borders of the navigation bar in the zoomed-in interface. The spatial distance between the respective function options in the navigation bar may refer to the table (tab) spacing in the navigation bar. The tab spacing may include the horizontal spacing and the vertical spacing between the respective function options in the zoomed-in interface, which are used to reduce the mutual interference between adjacent function options.

It should be understood that when the navigation bar is located at the bottom of the initial interface and is in the vertical layout in the initial interface, the display height of the navigation bar in the zoomed-in interface can be determined, according to the preset zoom-in ratio, to be a preset height associated with the preset zoom-in ratio, or the display height can be zoomed-in in the zoomed-in interface according to the preset zoom-in ratio. When the navigation bar is located at the bottom of the initial interface and is in the horizontal layout in the initial interface, the spatial distance between the respective function options in the navigation bar can be determined, according to the preset zoom-in ratio, to be a preset distance associated with the preset zoom-in ratio, or the spatial distance can be zoomed-in in the zoomed-in interface according to the preset zoom-in ratio.

For example, taking the preset zoom-in ratio as 180% and the preset ratio threshold as 170% as an example, that is, the preset zoom-in ratio is greater than the preset ratio threshold. In this case, as shown in FIG. 4a, the display height of the navigation bar indicated by 403 in the zoomed-in interface can be fixed to 80dp associated with the preset zoom-in ratio of 180%, and the spatial distance (that is, the tab spacing) between the respective function options in the navigation bar indicated by 404 can be fixed to 16dp associated with the preset zoom-in ratio of 180%.

In an embodiment of the present disclosure, when the navigation bar is located at the bottom of the initial interface and is in the vertical layout in the initial interface, the display height of the navigation bar in the zoomed-in interface can be determined based on the preset zoom-in ratio. When the navigation bar is located at the bottom of the initial interface and is in the horizontal layout in the initial interface, the spatial distance between the respective function options in the navigation bar can be determined based on the preset zoom-in ratio, thereby preparing for the subsequent drawing and display of the various navigation bars in the zoomed-in interface according to the layout styles of the navigation bars in the zoomed-in interface, so that all the interface elements can be better displayed in the zoomed-in interface, thereby effectively improving the level of detail of the interface display of the electronic device and then enhancing the display effect of the electronic device.

In some embodiments, determining the layout style of the interface element in the zoomed-in interface based on the element type of the interface element and the layout style of the interface element in the initial interface, and the preset zoom-in ratio associated with the zoom-in display instruction includes:
in response to the interface element being a menu bar, and the menu bar being located at top or side of the initial interface, determining a display width of the menu bar in the zoomed-in interface based on the preset zoom-in ratio, and determining the second number of lines of text in the menu bar in the zoomed-in interface based on the preset zoom-in ratio, and the second number of lines is greater than or equal to the number of lines of the text in the menu bar displayed in the initial interface.

In an embodiment of the present disclosure, when the interface element is the menu bar, and the menu bar is located at the top or the side of the initial interface, the electronic device can determine the display width of the menu bar in the zoomed-in interface based on the preset zoom-in ratio and determine the second number of lines of the text in the menu bar in the zoomed-in interface based on the preset zoom-in ratio, so that the menu bar in the zoomed-in interface can be drawn and displayed according to the layout style of the menu bar in the zoomed-in interface in the subsequent process.

Here, the menu bar can be an interface element in the UI interface of the electronic device that provides a set of function entries and navigation options for the user. The menu bar can be composed of a plurality of menu items, each of which can represent a set of related functions or commands. For example, the menu bar can include the plurality of menu items such as file, edit, view, etc.

It can be understood that when the menu bar is located at the top or the side of the initial interface, the display width of the menu bar in the zoomed-in interface can be determined, according to the preset zoom-in ratio, to be within a preset width range associated with the preset zoom-in ratio, or the display width can be zoomed-in in the zoomed-in interface according to the preset zoom-in ratio, etc. In addition, the second number of lines of the text in the menu bar in the zoomed-in interface can be determined according to the preset zoom-in ratio, and the second number of lines can be greater than or equal to the number of lines of the text in the menu bar displayed in the initial interface, that is, the text in the menu bar can support line wrapping in the zoomed-in interface.

It should be noted that the second number of lines can be set according to the amount of text in the menu bar in the actual application scenario, and the second number of lines can be the same as or different from the first number of lines, which is not limited in embodiments of the present disclosure.

For example, as shown in FIG. 4a, 406 indicates the menu bar, which is located at the top or the side of the initial interface. When the preset zoom-in ratio is 170%, a preset width range of the menu bar corresponding to the preset zoom-in ratio of 170% can be 200dp-288dp, that is, it can be determined that the display width of the menu bar in the zoomed-in interface can be at least 200dp and at most 288dp. If the display width of the menu bar in the zoomed-in interface is 288dp, the text in the menu bar can support wrapping into two lines in the zoomed-in interface.

In an embodiment of the present disclosure, when the interface element is the menu bar and the menu bar is located at the top or side of the initial interface, the display width of the menu bar in the zoomed-in interface can be determined based on the preset zoom-in ratio, and the second number of lines of the text in the menu bar in the zoomed-in interface can be determined based on the preset zoom-in ratio, thereby preparing for the subsequent drawing and display of the menu bar in the zoomed-in interface according to the layout style of the menu bar in the zoomed-in interface, so that all the interface elements can be better displayed in the zoomed-in interface, thereby effectively improving the level of detail of the interface display of the electronic device and then enhancing the display effect of the electronic device.

In some embodiments, determining the layout style of the interface element in the zoomed-in interface based on the element type of the interface element and the layout style of the interface element in the initial interface, and the preset zoom-in ratio associated with the zoom-in display instruction includes:
in response to the interface element being a toolbar and the toolbar being in a vertical layout in the initial interface, enlarging text in the toolbar in the zoomed-in interface based on the preset zoom-in ratio, and determining the third number of lines of the text in the toolbar in the zoomed-in interface based on the preset zoom-in ratio, and the third number of lines is greater than or equal to the number of lines of the text in the toolbar displayed in the initial interface.

In an embodiment of the present disclosure, when the interface element is the toolbar and the toolbar is in the vertical layout in the initial interface, the electronic device can enlarge the text in the toolbar in the zoomed-in interface based on the preset zoom-in ratio, and determine the third number of lines of the text in the toolbar in the zoomed-in interface based on the preset zoom-in ratio, so that the toolbar in the zoomed-in interface can be drawn and displayed according to the layout style of the toolbar in the zoomed-in interface in the subsequent process.

Here, the toolbar can be an interface element in the UI interface of the electronic device that provides a set of quick access tools or commands for the user. The toolbar can also be located at the top or the side of the UI interface of the electronic device, and tool items in the toolbar can perform various tasks, such as opening a file, saving a file, copying and pasting text, undoing and redoing operations, etc.

It can be understood that when the toolbar is in the vertical layout in the initial interface, the text in the toolbar can be enlarged in the zoomed-in interface according to the preset zoom-in ratio, and a layout style of an icon in the toolbar can remain unchanged in the zoomed-in interface. The third number of lines of the text in the toolbar in the zoomed-in interface can be determined according to the preset zoom-in ratio, and the third number of lines can be greater than or equal to the number of lines of the text in the toolbar displayed in the initial interface, that is, the text in the toolbar can support line wrapping in the zoomed-in interface.

It should be noted that the third number of lines can be set according to the amount of text in the toolbar in the actual application scenario. The third number of lines can be the same as or different from the first number of lines and the second number of lines, which is not limited by embodiments of the present disclosure.

For example, as shown in FIG. 4a, 405 indicates the toolbar, which is located at the top or the side of the initial interface. When the preset zoom-in ratio is 170%, the font size of the text in the toolbar can be fixed to 16dp corresponding to 170% in the zoomed-in interface. When the preset zoom-in ratio is 200%, the font size of the text in the toolbar in the zoomed-in interface can be kept consistent with the font size (i.e., 16dp) when the text in the toolbar is enlarged 170%, or the font size of the text in the toolbar in the zoomed-in interface can be fixed to 18dp corresponding to 200%.

In an embodiment of the present disclosure, when the interface element is the toolbar and the toolbar is in the vertical layout in the initial interface, the text in the toolbar can be enlarged in the zoomed-in interface based on the preset zoom-in ratio, and the third number of lines of the text in the toolbar in the zoomed-in interface can be determined based on the preset zoom-in ratio, thereby preparing for the subsequent drawing and display of the toolbar in the zoomed-in interface according to the layout style of the toolbar in the zoomed-in interface, so that all the interface elements can be better displayed in the zoomed-in interface, thereby effectively improving the level of detail of the interface display of the electronic device and then enhancing the display effect of the electronic device.

In some embodiments, determining the layout style of the interface element in the zoomed-in interface based on the element type of the interface element and the layout style of the interface element in the initial interface, and the preset zoom-in ratio associated with the zoom-in display instruction includes:
in response to the interface element being a title bar, enlarging text in the title bar in the zoomed-in interface based on a layout style of the title bar in the initial interface and the preset zoom-in ratio; and
based on the preset zoom-in ratio, determining distances between the text in the title bar and upper and lower borders of the title bar in the zoomed-in interface, and determining the fourth number of lines of the text in the title bar in the zoomed-in interface, and the fourth number of lines is greater than or equal to the number of lines of the text in the title bar displayed in the initial interface.

In an embodiment of the present disclosure, when the interface element is the title bar, the electronic device can enlarge the text in the title bar in the zoomed-in interface based on the layout style of the title bar in the initial interface and the preset zoom-in ratio, and based on the preset zoom-in ratio, determine the distances between the text in the title bar and the upper and lower borders of the title bar in the zoomed-in interface, and determine the fourth number of lines of the text in the title bar in the zoomed-in interface, so that the title bar in the zoomed-in interface can be drawn and displayed according to the layout style of the title bar in the zoomed-in interface in the subsequent process.

Here, the title bar can be located at the top of the UI interface of the electronic device, and the title bar can include information about the currently open window or application in the UI interface of the electronic device. For example, the title bar can display the name of the current window or application, and a set of control buttons, such as a minimize button, a maximize button, and a close button.

It should be understood that when the interface element is the title bar, the text in the title bar can be enlarged in the zoomed-in interface according to the layout style of the title bar in the initial interface and the preset zoom-in ratio, while a layout style of a control button in the title bar can remain unchanged in the zoomed-in interface. The distances between the text in the title bar and the upper and lower borders of the title bar in the zoomed-in interface can be determined, according to the preset zoom-in ratio, to be preset distances associated with the preset zoom-in ratio, or the distances between the text in the title bar and the upper and lower borders of the title bar in the zoomed-in interface can be enlarged according to the preset zoom-in ratio. In addition, the fourth number of lines of the text in the title bar in the zoomed-in interface can be determined according to the preset zoom-in ratio, and the fourth number of lines is greater than or equal to the number of lines of the text in the title bar displayed in the initial interface, that is, the text in the title bar can also support line wrapping in the zoomed-in interface.

It should be noted that the fourth number of lines can be set according to the amount of text in the title bar in the actual application scenario, and the fourth number of lines can also be the same as or different from the first number of lines and the second number of lines, which is not limited in embodiments of the present disclosure.

For example, as shown in FIG. 4a, 401 indicates a small title bar, and 402 indicates a large title bar. Enlargement strategies for the small title bar and the large title bar are the same. When the preset zoom-in ratio is 170%, the spacing between the text in the title bar and the upper border of the title bar and the spacing between the text and the lower border of the title bar can be fixed to 10dp corresponding to the preset zoom-in ratio of 170% in the zoomed-in interface, and the height of the title bar can automatically increase as the font size increases.

In an embodiment of the present disclosure, when the interface element is the title bar, the text in the title bar can be enlarged in the zoomed-in interface based on the layout style of the title bar in the initial interface and the preset zoom-in ratio, and based on the preset zoom-in ratio, the distances between the text in the title bar and the upper and lower borders of the title bar in the zoomed-in interface can be determined, and the fourth number of lines of the text in the title bar in the zoomed-in interface can be determined, thereby preparing for the subsequent drawing and display of the toolbar in the zoomed-in interface according to the layout style of the toolbar in the zoomed-in interface, so that all the interface elements can be better displayed in the zoomed-in interface, thereby effectively improving the level of detail of the interface display of the electronic device and then enhancing the display effect of the electronic device.

In some embodiments, determining the layout style of the interface element in the zoomed-in interface based on the element type of the interface element and the layout style of the interface element in the initial interface, and the preset zoom-in ratio associated with the zoom-in display instruction includes:
in response to the interface element being a pop-up window, enlarging text in the pop-up window in the zoomed-in interface based on a layout style of the pop-up window in the initial interface and the preset zoom-in ratio; and
based on the preset zoom-in ratio, enlarging an operation button in the pop-up window in a vertical layout in the zoomed-in interface, and determining the fifth number of lines of the text in the pop-up window in the zoomed-in interface, and the fifth number of lines is greater than or equal to the number of lines of the text in the pop-up window displayed in the initial interface.

In an embodiment of the present disclosure, when the interface element is the pop-up window, the electronic device can enlarge the text in the pop-up window in the zoomed-in interface based on the layout style of the pop-up window in the initial interface and the preset zoom-in ratio, and based on the preset zoom-in ratio, enlarge the operation button in the pop-up window in the vertical layout in the zoomed-in interface, and determine the fifth number of lines of the text in the pop-up window in the zoomed-in interface, so that the pop-up window in the zoomed-in interface can be drawn and displayed in the subsequent process according to the layout style of the pop-up window in the zoomed-in interface.

Here, the pop-up window can be a temporary window that appears in the UI interface of the electronic device and covers the current window. The pop-up window may be used to display notifications, warnings, prompts or require the user to perform certain operations, such as inputting information, confirming operations, etc. The pop-up window is temporary and prominent, and can appear on the screen as an independent window. The pop-up window will interrupt the user's attention during the user's current operation or browsing process, reminding the user to pay attention to the certain information or operation.

It should be understood that when the interface element is the pop-up window, the text in the pop-up window can be enlarged in the zoomed-in interface based on the layout style of the pop-up window in the initial interface and the preset zoom-in ratio, and based on the preset zoom-in ratio, the operation button in the pop-up window can be enlarged in the vertical layout in the zoomed-in interface. In addition, the fifth number of lines of the text in the pop-up window in the zoomed-in interface can be determined according to the preset zoom-in ratio, and the fifth number of lines may be greater than or equal to the number of lines of the text in the pop-up window displayed in the initial interface, that is, the text in the pop-up window can also support line wrapping in the zoomed-in interface.

It should be noted that the fifth number of lines can be set according to the amount of text in the pop-up window in the actual application scenario, and the fifth number of lines can also be the same as or different from the first number of lines and the second number of lines, which is not limited in embodiments of the present disclosure.

For example, as shown in FIG. 4a, 407 indicates the pop-up window. When the preset zoom-in ratio is 170%, the text in the pop-up window can be enlarged 1.7 times in the zoomed-in interface, and the operation button in the pop-up window can be enlarged 1.7 times in the vertical layout in the zoomed-in interface. When the preset zoom-in ratio is 200%, the text in the pop-up window can be enlarged 2 times in the zoomed-in interface, and the operation button in the pop-up window can be enlarged 2 times in the vertical layout in the zoomed-in interface, etc.

In embodiments of the present disclosure, when the interface element is the pop-up window, the text in the pop-up window can be enlarged in the zoomed-in interface based on the layout style of the pop-up window in the initial interface and the preset zoom-in ratio, and based on the preset zoom-in ratio, the operation button in the pop-up window can be enlarged in the vertical layout in the zoomed-in interface, and the fifth number of lines of the text in the pop-up window in the zoomed-in interface can be determined according to the preset zoom-in ratio, thereby preparing for the subsequent drawing and display of the pop-up window in the zoomed-in interface according to the layout style of the pop-up window in the zoomed-in interface, so that all the interface elements can be better displayed in the zoomed-in interface, thereby effectively improving the level of detail of the interface display of the electronic device and then enhancing the display effect of the electronic device.

In some embodiments, determining the layout style of the interface element in the zoomed-in interface based on the element type of the interface element and the layout style of the interface element in the initial interface, and the preset zoom-in ratio associated with the zoom-in display instruction includes:
in response to the interface element being a progress bar, enlarging text in the progress bar in the zoomed-in interface based on a layout style of the progress bar in the initial interface and the preset zoom-in ratio, and determining the sixth number of lines of the text in the progress bar in the zoomed-in interface based on the preset zoom-in ratio, and the sixth number of lines is greater than or equal to the number of lines of the text in the progress bar displayed in the initial interface.

In an embodiment of the present disclosure, when the interface element is the progress bar, the electronic device can enlarge the text in the progress bar in the zoomed-in interface based on the layout style of the progress bar in the initial interface and the preset zoom-in ratio, and determine the sixth number of lines of the text in the progress bar in the zoomed-in interface based on the preset zoom-in ratio, so that the progress bar in the zoomed-in interface can be drawn and displayed according to the layout style of the progress bar in the zoomed-in interface in the subsequent process.

Here, the progress bar can be an interface element in the UI interface of the electronic device that displays the processing speed, the completion degree, the remaining unfinished amount, and possible processing time of the task in real time in the form of a picture. The progress bar is usually displayed in the form of a rectangular bar, and its length or filling degree can represent the completion progress of the task.

It can be understood that when the interface element is the progress bar, the text in the progress bar can be enlarged in the zoomed-in interface based on the layout style of the progress bar in the initial interface and the preset zoom-in ratio, and the sixth number of lines of the text in the progress bar in the zoomed-in interface can be determined based on the preset zoom-in ratio, the sixth number of lines can be greater than or equal to the number of lines of the text in the progress bar displayed in the initial interface, that is, the text in the progress bar can also support line wrapping in the zoomed-in interface.

It should be noted that the sixth number of lines can be set according to the amount of text in the progress bar in the actual application scenario, and the sixth number of lines can also be the same as or different from the first number of lines and the second number of lines, which is not limited in embodiments of the present disclosure.

For example, as shown in FIG. 4a, 408 indicates the progress bar. When the preset zoom-in ratio is 170%, the text in the progress bar can be enlarged 1.7 times in the zoomed-in interface, and a progress display icon of the progress bar can remain unchanged in the zoomed-in interface. When the preset zoom-in ratio is 200%, the text in the progress bar can be enlarged 2 times in the zoomed-in interface, and the progress display icon of the progress bar can remain unchanged in the zoomed-in interface, etc.

In an embodiment of the present disclosure, when the interface element is the progress bar, the text in the progress bar can be enlarged in the zoomed-in interface based on the layout style of the progress bar in the initial interface and the preset zoom-in ratio, and the sixth number of lines of the text in the progress bar in the zoomed-in interface can be determined based on the preset zoom-in ratio, thereby preparing for the subsequent drawing and display of the progress bar in the zoomed-in interface according to the layout style of the progress bar in the zoomed-in interface, so that all the interface elements can be better displayed in the zoomed-in interface, thereby effectively improving the level of detail of the interface display of the electronic device and then enhancing the display effect of the electronic device.

In some embodiments, determining the layout style of the interface element in the zoomed-in interface based on the element type of the interface element and the layout style of the interface element in the initial interface, and the preset zoom-in ratio associated with the zoom-in display instruction includes:
in response to the interface element being an option box, enlarging the option box in the zoomed-in interface based on a layout style of the option box in the initial interface, a dimension of the option box and the preset zoom-in ratio, and the dimension of the option box is configured to represent the number of available options in the option box.

In an embodiment of the present disclosure, when the interface element is the option box, the electronic device can enlarge the option box in the zoomed-in interface based on the layout style of the option box in the initial interface, the dimension of the option box and the preset zoom-in ratio, so that the option box in the zoomed-in interface can be drawn and displayed according to the layout style of the option box in the zoomed-in interface in the subsequent process.

Here, the option box can be an interface element in the UI interface of the electronic device that provides a set of options for the user to select. The option box can allow the user to select one or more options from a set of predefined options, and the option box may include but is not limited to: a radio button, a check box, a drop-down selection box or a selection list, etc.

It can be understood that when the interface element is the option box, the option box can be enlarged in the zoomed-in interface according to the layout style of the option box in the initial interface, the dimension of the option box and the preset zoom-in ratio. Option boxes of different dimensions have different layout styles in the zoomed-in interface.

It should be noted that enlarging the option box in the zoomed-in interface may include: enlarging a text portion associated with an option in the option box in the zoomed-in interface, or, enlarging a unit corresponding to the option in the option box in the zoomed-in interface according to a position of the unit in the initial interface; or, enlarging, at the top of the zoomed-in interface, the unit corresponding to the option in the option box, etc., which is not limited by embodiments of the present disclosure.

In embodiments of the present disclosure, when the interface element is the option box, the option box can be enlarged in the zoomed-in interface based on the layout style of the option box in the initial interface, the dimension of the option box and the preset zoom-in ratio, thereby preparing for the subsequent drawing and display of the option box in the zoomed-in interface according to the layout style of the option box in the zoomed-in interface, so that all the interface elements can be better displayed in the zoomed-in interface, thereby effectively improving the level of detail of the interface display of the electronic device and then enhancing the display effect of the electronic device.

In some embodiments, enlarging the option box in the zoomed-in interface based on the layout style of the option box in the initial interface, the dimension of the option box and the preset zoom-in ratio includes:
in response to the dimension of the option box being a first preset dimension, enlarging a unit corresponding to an option in the option box in the zoomed-in interface based on the preset zoom-in ratio, and determining a font size of the option in the option box to remain unchanged;
in response to the dimension of the option box being less than or equal to a second preset dimension, determining not to display, in the zoomed-in interface, the unit corresponding to the option in the option box, or, enlarging, at top of the zoomed-in interface, the unit corresponding to the option in the option box based on the preset zoom-in ratio; and
in response to the dimension of the option box being greater than the second preset dimension, determining not to display, in the zoomed-in interface, the unit corresponding to the option in the option box, or, determining to split the option box into a plurality of selectors in the zoomed-in interface, and enlarging, at top of the corresponding plurality of selectors, the unit corresponding to the option in the option box based on the preset zoom-in ratio, respectively, and the second preset dimension is greater than the first preset dimension.

In an embodiment of the present disclosure, when the dimension of the option box is the first preset dimension, the electronic device can enlarge the unit corresponding to the option in the option box in the zoomed-in interface based on the preset zoom-in ratio, and determine the font size of the option in the option box to remain unchanged; when the dimension of the option box is less than or equal to the second preset dimension, the electronic device can determine not to display, in the zoomed-in interface, the unit corresponding to the option in the option box, or, enlarge, at the top of the zoomed-in interface, the unit corresponding to the option in the option box based on the preset zoom-in ratio; and when the dimension of the option box is greater than the second preset dimension, the electronic device can determine not to display, in the zoomed-in interface, the unit corresponding to the option in the option box, or, determine that the option box is split into the plurality of selectors in the zoomed-in interface, and enlarge, at the top of the corresponding plurality of selectors, the unit corresponding to the option in the option box based on the preset zoom-in ratio, respectively.

It should be noted that both the first preset dimension and the second preset dimension can be preset in the electronic device, as long as the second preset dimension is greater than the first preset dimension, which is not limited by embodiments of the present disclosure. For example, the first preset dimension can be 1, the second preset dimension can be 3, etc.

It can be understood that when the dimension of the option box is the first preset dimension, the corresponding unit can be added after the option in the option box; when the zoomed-in display is required, the unit corresponding to the option in the option box can be enlarged in the zoomed-in interface according to the preset zoom-in ratio, and the font size of the option in the option box can remain unchanged in the zoomed-in interface.

When the dimension of the option box is less than or equal to the second preset dimension, it is preferred not to add the corresponding unit after the option in the option box. If the addition is required, the corresponding unit is added at the top of the initial interface. When the zoomed-in display is required,, the font size of the option in the option box remains unchanged in the zoomed-in interface. It can be determined that the unit corresponding to the option in the option box is not displayed in the zoomed-in interface, or the unit corresponding to the option in the option box can be zoomed-in at the top of the zoomed-in interface according to the preset zoom-in ratio.

When the dimension of the option box is greater than the second preset dimension, the corresponding unit is not added after the option in the option box. If the addition is required, the option box is split into the plurality of selectors for display. When the zoomed-in display is required, the font size of the option in the option box remains unchanged in the zoomed-in interface, and it can be determined that the unit corresponding to the option in the option box is not displayed in the zoomed-in interface, or, the unit corresponding to the option in the option box can be zoomed-in at the top of the corresponding plurality of selectors according to the preset zoom-in ratio, respectively, and text portions in the plurality of selectors can be enlarged in the zoomed-in interface according to the preset zoom-in ratio.

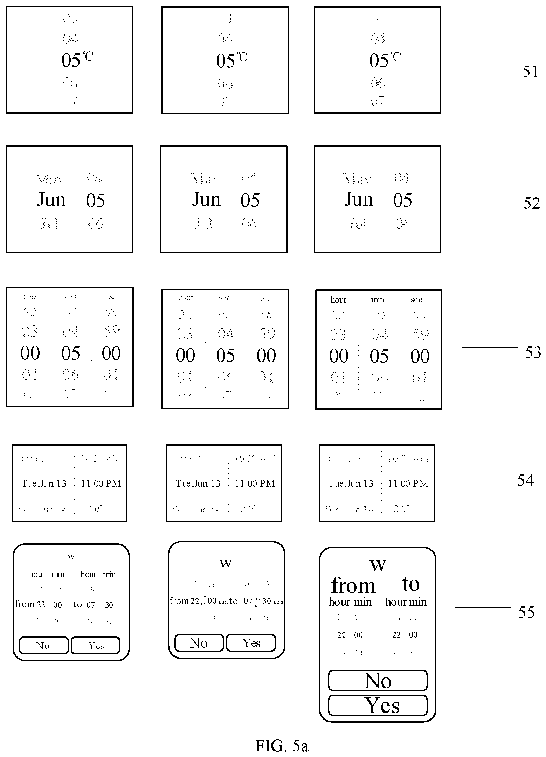

For example, as shown in FIG. 5a, 51 indicates a temperature option box with a dimension of one. In this case, when the option box is enlarged from 100% to 200%, the font size of the option in the temperature option box remains unchanged, and the unit (°C) corresponding to the option in the temperature option box is enlarged 2 times in the zoomed-in interface. 52 in FIG. 5a indicates a date option box with a dimension of two. In this case, when the date option box is enlarged from 100% to 200%, the font size of the option in the date option box remains unchanged, and the option in the date option box has no corresponding unit, that is, the unit is not displayed in both the initial interface and the zoomed-in interface. 53 in FIG. 5a indicates a time point option box with a dimension of three. In this case, when the time point option box is enlarged from 100% to 200%, the font size of the option in the time point option box remains unchanged, and the unit (hours, minutes, seconds) corresponding to the option in the time point option box is enlarged 2 times at the top of the zoomed-in interface. 54 in FIG. 5a indicates a date and time option box with a dimension of four. In this case, when the date and time option box is enlarged from 100% to 200%, the font size of the option in the date and time option box remains unchanged, and the option in the date option box has no corresponding unit, that is, the unit is not displayed in the initial interface and the zoomed-in interface. 55 in FIG. 5a indicates a time period option box with a dimension of four. In this case, when the time period option box is enlarged from 100% to 200%, the font size of the option in the time period option box remains unchanged, and the text part in the time period option box can be enlarged 2 times in the zoomed-in interface, and the unit (hours and minutes) corresponding to the option in the time period option box can be enlarged 2 times at the top of the option of the split two 2-dimensional selectors.

In embodiments of the present disclosure, through the option boxes of different dimensions and the layout styles of the option boxes in the initial interface, different layout styles of the option boxes in the zoomed-in interface can be determined according to the preset zoom-in ratio, thereby preparing for the subsequent drawing and display of the option box in the zoomed-in interface according to the layout style of the option box in the zoomed-in interface, so that all the interface elements can be better displayed in the zoomed-in interface, thereby improving the level of detail of the interface display of the electronic device and enhancing the display effect of the electronic device.

In some embodiments, determining the layout style of the interface element in the zoomed-in interface based on the element type of the interface element and the layout style of the interface element in the initial interface, and the preset zoom-in ratio associated with the zoom-in display instruction includes:

in response to the interface element being an input box, enlarging the input box in the zoomed-in interface based on a layout style of the input box in the initial interface and the preset zoom-in ratio, and determining the seventh number of lines of text in the input box in the zoomed-in interface based on the preset zoom-in ratio, and the seventh number of lines is greater than or equal to the number of lines of the text in the input box displayed in the initial interface.

In an embodiment of the present disclosure, when the interface element is the input box, the electronic device can enlarge the input box in the zoomed-in interface based on the layout style of the input box in the initial interface and the preset zoom-in ratio, and determine the seventh number of lines of the text in the input box in the zoomed-in interface based on the preset zoom-in ratio, so that the input box in the zoomed-in interface can be drawn and displayed according to the layout style of the input box in the zoomed-in interface in the subsequent process.

Here, the input box can be an interface element in the UI interface of the electronic device for receiving user input information. The input box can be a rectangular area that allows the user to enter text or numbers. The user can enter information in the input box through a keyboard, a touch screen or other input devices. The input box can collect user data and transmit it to the application or system for further processing or analysis.

It can be understood that when the interface element is the input box, the input box can be enlarged in the zoomed-in interface based on the layout style of the input box in the initial interface and the preset zoom-in ratio, and the seventh number of lines of the text in the input box in the zoomed-in interface is determined based on the preset zoom-in ratio, the seventh number of lines can be greater than or equal to the number of lines of the text in the input box displayed in the initial interface, that is, the text in the input box can also support line wrapping in the zoomed-in interface.

It should be noted that the seventh number of lines can be set according to the amount of text in the input box in the actual application scenario, and the seventh number of lines can also be the same as or different from the first number of lines and the second number of lines, which is not limited in embodiments of the present disclosure.

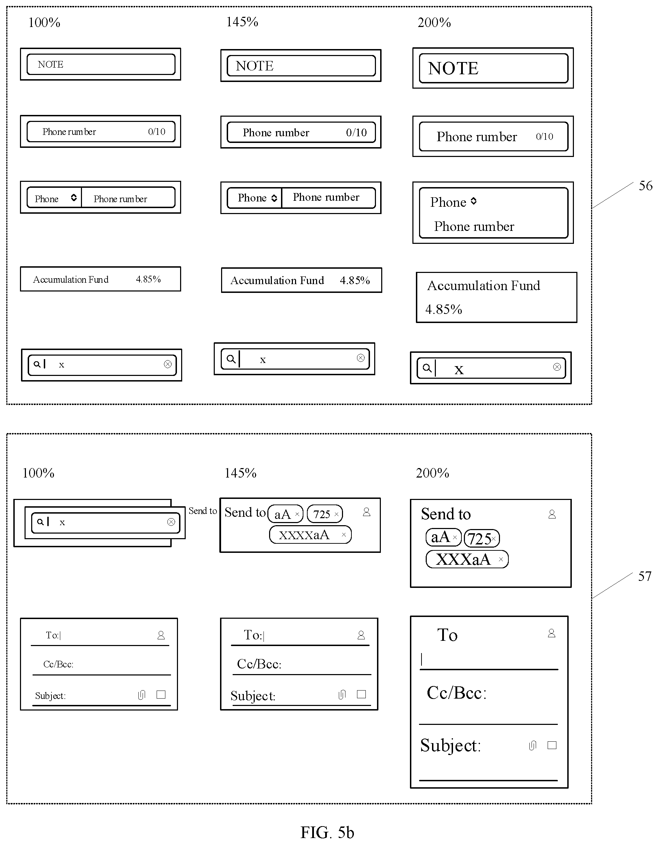

For example, as shown in FIG. 5b, 56 indicates a text input box, 57 indicates a composite input box, and enlargement strategies for the text input box and the composite input box are the same. When the preset zoom-in ratio is 170%, the text in the input box can be enlarged 1.7 times in the zoomed-in interface, while icons inside and outside the input box can remain unchanged in the zoomed-in interface. When the preset zoom-in ratio is 200%, the text in the input box can be enlarged 2 times in the zoomed-in interface, while the icons inside and outside the input box can remain unchanged in the zoomed-in interface, etc.

In embodiments of the present disclosure, when the interface element is the input box, the input box can be enlarged in the zoomed-in interface based on the layout style of the input box in the initial interface and the preset zoom-in ratio, and the seventh number of lines of the text in the input box in the zoomed-in interface can be determined based on the preset zoom-in ratio, thereby preparing for the subsequent drawing and display of the input box in the zoomed-in interface according to the layout style of the input box in the zoomed-in interface, so that all the interface elements can be better displayed in the zoomed-in interface, thereby effectively improving the level of detail of the interface display of the electronic device and then enhancing the display effect of the electronic device.

In some embodiments, determining the layout style of the interface element in the zoomed-in interface based on the element type of the interface element in the step S120 includes:
in response to the interface element being a control element, determining the layout style of the control element in the zoomed-in interface based on a control type of the control element.

In an embodiment of the present disclosure, when the interface element is the control element, the electronic device can determine the layout style of the control element in the zoomed-in interface based on the control type of the control element, so that the zoomed-in interface can be drawn and displayed according to layout styles of all interface elements in the zoomed-in interface in the subsequent process.

Here, the control element may be an interface in the UI interface of the electronic device that provides the user with the interaction with an application or a web page, and the control element can be operated by the user to perform a specific function or input data. For example, the control element may include, but is not limited to: a fixed button, a Floating Action Button (FAB), a slider, an index, a drawer window, a check box, or a switch, etc.

It should be understood that when the interface element is the control element, the layout style of the control element in the zoomed-in interface can be determined according to the control type of the control element. Control elements of different control types have different layout styles in the zoomed-in interface. Some control elements can be enlarged and displayed in the zoomed-in interface according to the preset zoom-in ratio, and the display styles of other control elements can remain unchanged in the zoomed-in interface.

It should be noted that the control type of the control element may include a type of control element containing text and a type of control element not containing text, etc., which is not limited in embodiments of the present disclosure.

In embodiments of the present disclosure, when the interface element is the control element, the layout style of the control element in the zoomed-in interface can be determined based on the control type of the control element, thereby preparing for the subsequent drawing and display of the zoomed-in interface according to the layout styles of all the interface elements in the zoomed-in interface, so that all the interface elements can be displayed in the zoomed-in interface, thereby better improving the level of detail of the interface display of the electronic device and enhancing the display effect of the electronic device.

In some embodiments, determining the layout style of the control element in the zoomed-in interface based on the control type of the control element includes:
in response to the control type being a type including text, enlarging the control element in the zoomed-in interface based on the preset zoom-in ratio associated with the zoom-in display instruction, and determining the eighth number of lines of the text in the control element in the zoomed-in interface based on the preset zoom-in ratio, the eighth number of lines is greater than the number of lines of the text in the control element displayed in the initial interface; and
in response to the control type being a type that does not include the text, determining a display style of the control element to remain unchanged in the zoomed-in interface.

In an embodiment of the present disclosure, when the control type is the type that includes the text, the electronic device can enlarge the control element in the zoomed-in interface based on the preset zoom-in ratio associated with the zoom-in display instruction, and determine the eighth number of lines of the text in the control element in the zoomed-in interface based on the preset zoom-in ratio. When the control type is the type that does not include the text, the electronic device can determine the display style of the control element to remain unchanged in the zoomed-in interface.

It should be understood that when the control type is the type that does not contain the text, the display style of the control element can be kept unchanged in the zoomed-in interface. When the control type is the type that contains the text, the control element can be enlarged in the zoomed-in interface according to the layout style of the control element in the initial interface and the preset zoom-in ratio, and the eighth number of lines of the text in the control element in the zoomed-in interface is determined according to the preset zoom-in ratio. The eighth number of lines can be greater than or equal to the number of lines of the text in the control element displayed in the initial interface, that is, the text in the control element can also support line wrapping in the zoomed-in interface.

It should be noted that the eighth number of lines can be set according to the amount of text in the control element in the actual application scenario, and the eighth number of lines can also be the same as or different from the first number of lines and the second number of lines, which is not limited in embodiments of the present disclosure.

For example, as shown in FIG. 4b, 409 indicates a fixed button (a large button or a small button), 410 indicates a FAB, 411 indicates a slider, 412 indicates an index, 414 indicates a drawer window, 418 indicates a check box, and 419 indicates a switch. The fixed button 409, the slider 411, the index 412, and the drawer window 414 can all be enlarged and displayed in the zoomed-in interface according to the preset zoom-in ratio; and the display styles of the FAB 410, the check box 418, and the switch 419 can all remain unchanged in the zoomed-in interface.

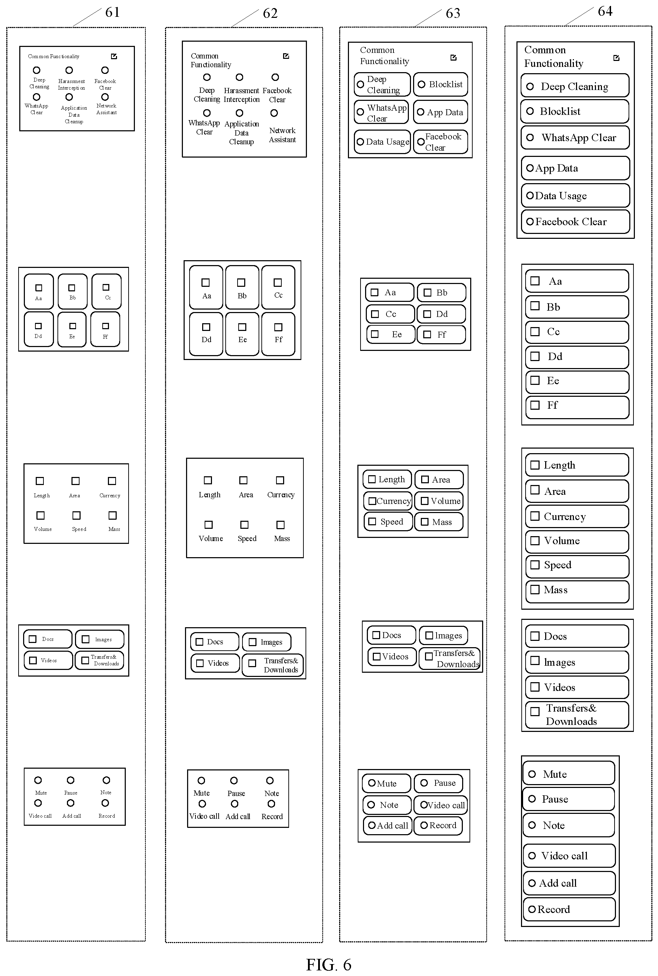

In some embodiments, as shown in FIG. 4b, 413 indicates a prompt, 415 indicates a guide bubble, and 417 indicates a tab bar, and these three interface elements can also be directly enlarged and displayed in the zoomed-in interface according to the preset zoom-in ratio. As shown in FIG. 6, 61 indicates a layout style of a list element in the initial interface, 62 indicates a first layout style of the list element in the zoomed-in interface, 63 indicates a second layout style of the list element in the zoomed-in interface, and 64 indicates a third layout style of the list element in the zoomed-in interface. In this case, the list element can also be directly enlarged and displayed in the zoomed-in interface according to the preset zoom-in ratio, and the arrangement of the list can be automatically adjusted by the enlarged font size.

In an embodiment of the present disclosure, when the control type is the type that contains the text, the control element can be enlarged in the zoomed-in interface based on the preset zoom-in ratio associated with the zoom-in display instruction, and the eighth number of lines of the text in the control element in the zoomed-in interface can be determined based on the preset zoom-in ratio; and when the control type is the type that does not contain the text, it is determined that the display style of the control element remains unchanged in the zoomed-in interface, thereby preparing for the subsequent drawing and display of the zoomed-in interface according to the layout styles of all the interface elements in the zoomed-in interface, so that all the interface elements can be displayed in the zoomed-in interface, thereby more effectively improving the level of detail of the interface display of the electronic device, and then improving the display effect of the electronic device.

In some embodiments, the display method further includes:
obtaining an area type of an area to which the interface element belongs in the initial interface; and
determining the layout style of the interface element in the zoomed-in interface based on the element type of the interface element in the step 120 includes:
determining the layout style of the interface element in the zoomed-in interface based on the element type and the area type of the interface element.

In an embodiment of the present disclosure, the electronic device may first obtain the area type of the area to which the interface element belongs in the initial interface, and then determine the layout style of the interface element in the zoomed-in interface based on the element type and the area type of the interface element, so that the zoomed-in interface can be drawn and displayed according to the layout styles of all the interface elements in the zoomed-in interface in the subsequent process.

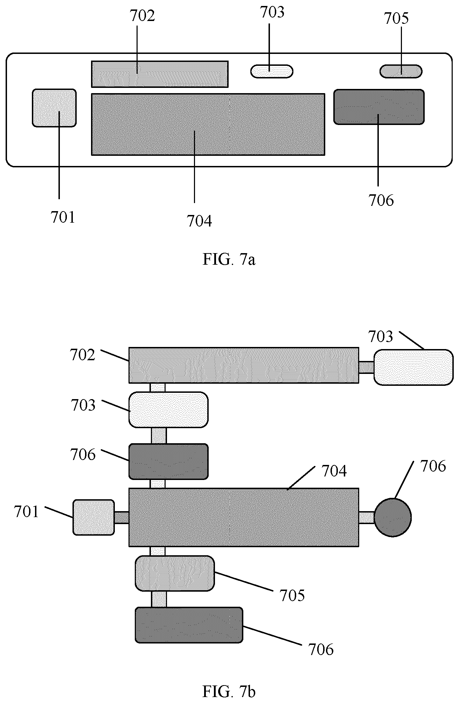

Here, as shown in FIG. 7a, the area types to which the interface elements belong in the initial interface may include but are not limited to: a header area 701, a title area 702, a title annotation area 703, a content area 704, an annotation area 705 and a footer area 706.

It can be understood that the embodiments of the present disclosure can determine the area type of the area to which the interface element belongs in the initial interface by the display position of the interface element in the initial interface, and then determine the layout style of the interface element in the zoomed-in interface according to the element type and the area type of the interface element.

It should be noted that interface elements of the same element type have different area types, and their corresponding layout styles in the zoomed-in interface are different. Similarly, interface elements of the same area type have different element types, and their corresponding layout styles in the zoomed-in interface are also different.

In embodiments of the present disclosure, the area type of the area to which the interface element belongs in the initial interface can be obtained, and based on the element type and the area type of the interface element, the layout style of the interface element in the zoomed-in interface can be determined, thereby preparing for the subsequent drawing and display of the zoomed-in interface according to the layout styles of all the interface elements in the zoomed-in interface, so that all the interface elements can be displayed in the zoomed-in interface, thereby better improving the level of detail of the interface display of the electronic device, and then improving the display effect of the electronic device.

In some embodiments, determining the layout style of the interface element in the zoomed-in interface based on the element type and the area type of the interface element includes:
determining the layout style of the interface element in the zoomed-in interface based on the element type and the area type of the interface element and a preset area combination strategy associated with the area type.

In embodiments of the present disclosure, the electronic device can determine the layout style of the interface element in the zoomed-in interface based on the element type and the area type of the interface element and the preset area combination strategy associated with the area type, so that the zoomed-in interface can be drawn and displayed according to layout styles of all interface elements in the zoomed-in interface in the subsequent process.

Here, the preset area combination strategy can be a strategy preset in the electronic device for combining interface elements of different area types. For example, the preset area combination strategy can indicate the combination of the header area and the title area, or the combination of interface elements corresponding to the header area and an area type other than the header area, etc.

It can be understood that after determining the area type of the interface element, the electronic device can determine the display style and/or display position of the interface element in the zoomed-in interface according to the combination method of interface elements indicated by the preset area combination strategy associated with the area type, and the element type of the interface element.

In some embodiments, as shown in FIG. 7b, the element spacing between the header area 701 and the content area 704 can be 16dp, the element spacing between the title area 702 and the title annotation area 703 on the right can be 8dp, the element spacing between the title area 702 and the title annotation area 703 below the title area 702 can be 4dp, the element spacing between the title annotation area 703 below the title area 702 and the adjacent footer area 706 can be 10dp, the element spacing between the footer area 706 adjacent to the title annotation area 703 and the content area 704 can be 4dp, the element spacing between the content area 704 and the adjacent footer area 706 can be 10dp, the element spacing between the content area 704 and the annotation area 705 can be 4dp, and the element spacing between the annotation area 705 and the adjacent footer area 706 can be 10dp.

In embodiments of the present disclosure, the layout style of the interface element in the zoomed-in interface can be determined by the element type and the area type of the interface element, as well as the preset area combination strategy associated with the area type, thereby preparing for the subsequent drawing and display of the zoomed-in interface according to the layout styles of all the interface elements in the zoomed-in interface, so that all the interface elements can be displayed in the zoomed-in interface, thereby better improving the level of detail of the interface display of the electronic device, and then improving the display effect of the electronic device.

In some embodiments, determining the layout style of the interface element in the zoomed-in interface based on the element type and the area type of the interface element and the preset area combination strategy associated with the area type includes:
in response to an area type of a current interface element being a header area, and the preset area combination strategy indicating a combination of an interface element corresponding to the header area and an interface element corresponding to an area type other than the header area, determining, based on an element type of the current interface element and an element type of the interface element corresponding to the area type other than the header area, a display position of a combined display of the interface element corresponding to the header area and the interface element corresponding to the area type other than the header area in the zoomed-in interface.

In an embodiment of the present disclosure, when the area type of the current interface element is the head area and the preset area combination strategy indicates the combination of the interface elements corresponding to the head area and the area type other than the head area, the electronic device can determine, based on the element type of the current interface element and the element type of the interface element corresponding to the area type other than the head area, the display position of the combined display of the interface elements corresponding to the head area and the area type other than the head area in the zoomed-in interface, so that the zoomed-in interface can be drawn and displayed according to the layout styles of all the interface elements in the zoomed-in interface in the subsequent process.

Here, the header area may refer to a starting point of an interface touched by the user in the UI interface of the electronic device. For example, the header area may display key elements such as an icon logo and a name of the product or application. The area types other than the header area may include but are not limited to: the title area, the title annotation area, the content area, the annotation area and the footer area.

It can be understood that when the area type of the current interface element is the head area, and the preset area combination strategy indicates the combination of the interface elements corresponding to the head area and the area type other than the head area, the display position of the combined display of the interface elements corresponding to the head area and the area type other than the head area in the zoomed-in interface can be determined according to the element type of the interface element corresponding to the head area and the element type of the interface element corresponding to the area type other than the head area, thereby realizing a more coordinated combined display in the zoomed-in interface.

It should be noted that the embodiments of the present disclosure can, according to the preset zoom-in ratio associated with the zoom-in display instruction, enlarge and display the text in the interface elements corresponding to the head area and the area type other than the head area in the zoomed-in interface, while icon sizes in the interface elements corresponding to the head area and the area type other than the head area remain unchanged in the zoomed-in interface.

In some embodiments, determining, based on the element type of the current interface element and the element type of the interface element corresponding to the area type other than the header area, the display position of the combined display of the interface element corresponding to the header area and the interface element corresponding to the area type other than the header area in the zoomed-in interface includes:
in response to the header area being a thumbnail, and the area type other than the header area including a fixed-single-line title area, displaying the interface element corresponding to the header area and an interface element corresponding to an area type other than the fixed-single-line title area and the header area in combination in the zoomed-in interface with the header area in a left-aligned manner; and
in response to the header area being the thumbnail and the area type other than the header area including a non-fixed-single-line title area, or the header area being a non-thumbnail, a control or a serial number, displaying interface elements corresponding to area types other than the header area in combination in the zoomed-in interface with the non-fixed-single-line title area in the left-aligned manner, and determining a display position of the header area to remain unchanged in the zoomed-in interface.

In this way, when the header area is the thumbnail and the area type other than the header area includes the fixed-single-line title area, the interface elements corresponding to the header area and the area types other than the header area can be displayed in combination in the zoomed-in interface with the header area in the left-aligned manner. When the header area is the thumbnail and the area type other than the header area includes the non-fixed-single-line title area, or the header area is the non-thumbnail, the control or the serial number, the interface elements corresponding to the area types other than the header area can be displayed in combination in the zoomed-in interface with the non-fixed-single-line title area in the left-aligned manner, and the display position of the header area is determined to remain unchanged in the zoomed-in interface, thereby preparing for the subsequent drawing and display of the zoomed-in interface according to the layout styles of all the interface elements in the zoomed-in interface, so that all the interface elements can be displayed more coordinated in the zoomed-in interface, thereby better improving the level of detail of the interface display of the electronic device, and then improving the display effect of the electronic device.

In embodiments of the present disclosure, the thumbnail may be an image obtained by scaling down the icon corresponding to the interface element in the header area. The fixed-single-line title area may be an area that displays the title in the fixed single line. The non-fixed-single-line title area may be an area that displays the title in a single line or multiple lines.

It can be understood that when the header area is the thumbnail and the area type other than the header area includes the fixed-single-line title area, the interface elements corresponding to the header area and the area type other than the fixed-single-line title area and the header area are displayed in combination in the zoomed-in interface with the header area in the left-aligned manner. When the header area is the thumbnail and the area type other than the header area includes the non-fixed-single-line title area, the interface elements corresponding to the area types other than the header area are displayed in combination in the zoomed-in interface with the title area in the left-aligned manner, and the display position of the header area is determined to remain unchanged in the zoomed-in interface. When the header area is the non-thumbnail, the control or the serial number, regardless of whether it is the fixed-single-line title area or the non-fixed-single-line title area, the interface elements corresponding to the area types other than the header area can be displayed in combination in the zoomed-in interface with the title area in the left-aligned manner, and the display position of the header area is determined to remain unchanged in the zoomed-in interface.

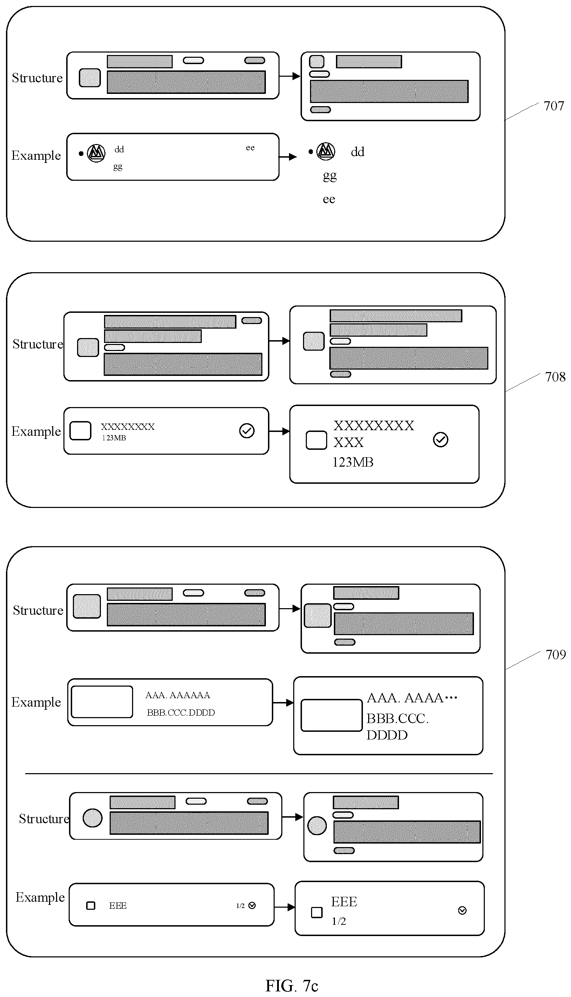

For example, as shown in FIG. 7C, 707 indicates that the header area is the thumbnail and the area type other than the header area includes the fixed-single-line title area. In this case, the interface elements corresponding to the header area and the area type other than the fixed-single-line title area and the header area can be displayed in combination in the zoomed-in interface with the header area in the left-aligned manner. 708 in FIG. 7C indicates that the header area is the thumbnail and the area type other than the header area includes the non-fixed single-line title area. In this case, the interface elements corresponding to the area types other than the header area can be displayed in combination in the zoomed-in interface with the title area in the left-aligned manner, and the header area is determined to be displayed in the center of the left side of the zoomed-in interface. 709 in FIG. 7C indicates that the header area is the non-thumbnail, the control or the serial number. In this case, the interface elements corresponding to the area types other than the header area can also be displayed in combination in the zoomed-in interface with the title area in the left-aligned manner, and the header area is determined to be displayed in the center of the left side of the zoomed-in interface.

In an embodiment of the present disclosure, when the area type of the current interface element is the head area, and the preset area combination strategy indicates the combination of the interface elements corresponding to the head area and the area type other than the head area, the display position of the combined display of the interface elements corresponding to the head area and the area type other than the head area in the zoomed-in interface can be determined based on the element type of the current interface element and the element type of the interface element corresponding to the area type other than the head area, thereby preparing for the subsequent drawing and display of the zoomed-in interface according to the layout styles of all the interface elements in the zoomed-in interface, so that all the interface elements can be displayed more coordinated in the zoomed-in interface, thereby effectively improving the level of detail of the interface display of the electronic device, and then improving the display effect of the electronic device.

In some embodiments, determining the layout style of the interface element in the zoomed-in interface based on the element type and the area type of the interface element includes:
in response to an area type of a current interface element being a content area, and the content area being a text element, enlarging the text element in the zoomed-in interface based on the preset zoom-in ratio associated with the zoom-in display instruction, and determining the ninth number of lines of the text element in the zoomed-in interface, and the ninth number of lines is greater than the number of lines of the text element displayed in the initial interface; and
in response to the area type of the current interface element being the content area, and the content area being an image-text composite element, enlarging, based on the preset zoom-in ratio, an image and text in the image-text composite element in the zoomed-in interface in a horizontal layout, and determining the image in the image-text composite element to be centered vertically in the zoomed-in interface.

In an embodiment of the present disclosure, when the area type of the current interface element is the content area, and the content area is the text element, the electronic device can enlarge the text element in the zoomed-in interface based on the preset zoom-in ratio associated with the zoom-in display instruction, and determine the ninth number of lines of the text element in the zoomed-in interface; and when the area type of the current interface element is the content area, and the content area is the image-text composite element, the electronic device can enlarge, based on the preset zoom-in ratio, the image and the text in the image-text composite element in the zoomed-in interface in the horizontal layout, and determine the image in the image-text composite element to be centered vertically in the zoomed-in interface, so that the content area in the zoomed-in interface can be drawn and displayed according to the layout style of the content area in the zoomed-in interface in the subsequent process.

Here, the content area may be an area in the UI interface of the electronic device for displaying and operating the related information, the content area of the text element may include only the text, and the content area of the image-text composite element may include the text and the image, etc.

It can be understood that when the current interface element is the content area of the text element, the text element can be enlarged in the zoomed-in interface according to the preset zoom-in ratio, and the ninth number of lines of the text element in the zoomed-in interface can be determined. The ninth number of lines can be greater than or equal to the number of lines of the text in the content area displayed in the initial interface, that is, the text in the content area can support line wrapping in the zoomed-in interface.

It should be noted that the ninth number of lines can be set according to the amount of text in the content area in the actual application scenario, and the ninth number of lines can also be the same as or different from the first number of lines and the second number of lines, which is not limited in embodiments of the present disclosure.

When the current interface element is the content area of the image-text composite element, the image and the text in the image-text composite element can be enlarged and displayed in the horizontal layout in the area where the content area is located in the zoomed-in interface according to the preset zoom-in ratio, and the image in the image-text composite element can be centered vertically in the zoomed-in interface.

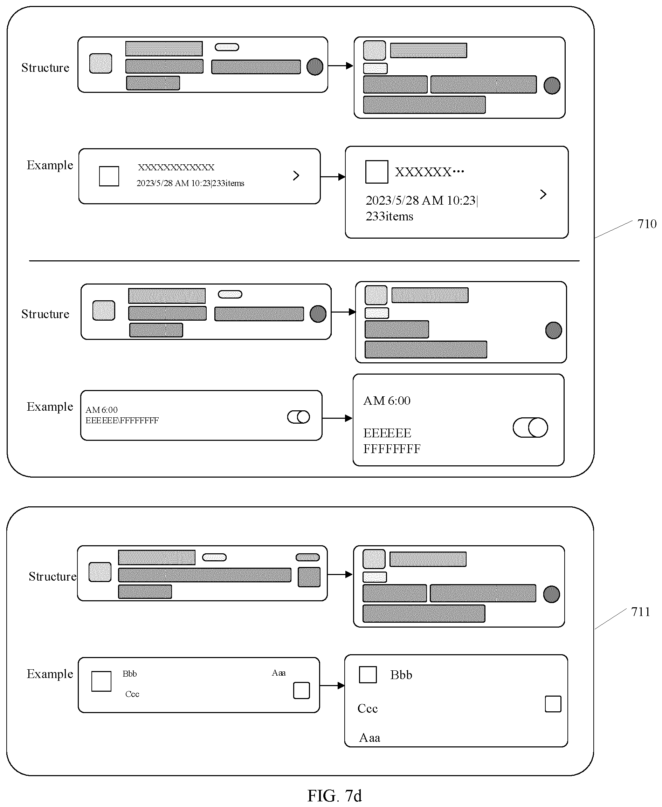

For example, as shown in FIG. 7d, 710 indicates that the content area is the text element. In this case, the text element can be enlarged in the zoomed-in interface according to the preset zoom-in ratio associated with the zoom-in display instruction, and it is determined that the text element supports line wrapping or independent line display in the zoomed-in interface. 711 in FIG. 7d indicates that the content area is the image-text composite element. In this case, the image and the text in the image-text composite element can be enlarged in the zoomed-in interface in the horizontal layout according to the preset zoom-in ratio, and the image in the image-text composite element can be displayed in the zoomed-in interface in the vertically centered state.

In embodiments of the present disclosure, the layout styles displayed in the zoomed-in interface corresponding to the content areas of different element types can be determined, so that the zoomed-in interface can be drawn and displayed according to the layout styles of all the interface elements in the zoomed-in interface in the subsequent process, and all the interface elements can be displayed more coordinated in the zoomed-in interface, thereby effectively improving the level of detail of the interface display of the electronic device and enhancing the display effect of the electronic device.

In some embodiments, determining the layout style of the interface element in the zoomed-in interface based on the element type and the area type of the interface element includes:
in response to an area type of a current interface element being a footer area, and the footer area being a single-graphic type or a text button type, determining a display position of the footer area to remain unchanged in the zoomed-in interface;
in response to the area type of the current interface element being the footer area, and the footer area being a multi-graphic type or an illustrated type, determining the footer area to display at bottom of the zoomed-in interface; and
in response to the area type of the current interface element being the footer area, and the footer area being an image-text composite type, determining a display position of an image in the footer area to remain unchanged in the zoomed-in interface, and determining text in the footer area to display at the bottom of the zoomed-in interface.

In an embodiment of the present disclosure, when the area type of the current interface element is the footer area, and the footer area is the single-graphic type or the text button type, the electronic device can determine the display position of the footer area to remain unchanged in the zoomed-in interface; when the area type of the current interface element is the footer area, and the footer area is the multi-graphic type or the illustrated type, the electronic device can determine the footer area to display at the bottom of the zoomed-in interface; and when the area type of the current interface element is the footer area, and the footer area is the image-text composite type, the electronic device can determine the display position of the image in the footer area to remain unchanged in the zoomed-in interface, and determine the text in the footer area to display at the bottom of the zoomed-in interface.

Here, the footer area may refer to an area at the end of the content area in the UI interface of the electronic device or at the bottom of the UI interface.

It can be understood that when the current interface element is the footer area of the single-graphic type or the text button type, the display position of the footer area is determined to remain unchanged in the zoomed-in interface; when the current interface element is the footer area of the multi-graphic type or the illustrated type, the footer area is determined to be displayed at the bottom of the zoomed-in interface; and when the current interface element is the footer area of the image-text composite type, the display position of the image in the footer area is determined to remain unchanged in the zoomed-in interface, and the text in the footer area is determined to be displayed at the bottom of the zoomed-in interface.

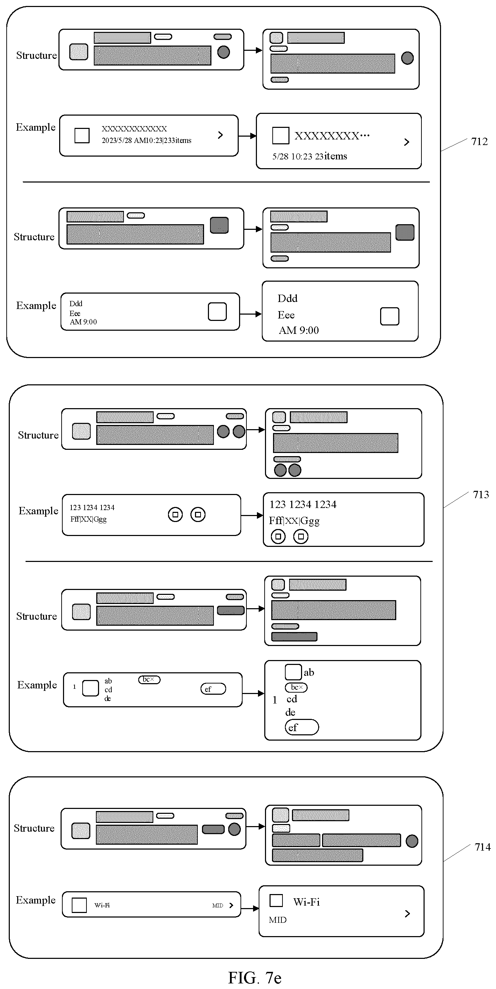

For example, as shown in FIG. 7e, 712 indicates the footer area of the single-graphic type or the text button type. In this case, the display position of the footer area can be kept unchanged in the zoomed-in interface. 713 in FIG. 7e indicates the footer area of the multi-graphic type or the illustrated type. In this case, the footer area can be displayed at the bottom of the zoomed-in interface. 714 in FIG. 7e indicates the footer area of the image-text composite type. In this case, the display position of the image in the footer area can be kept unchanged in the zoomed-in interface, and the text in the footer area can be displayed at the bottom of the zoomed-in interface.

In embodiments of the present disclosure, the layout styles displayed in the zoomed-in interface corresponding to the footer areas of different element types can be determined, so that the zoomed-in interface can be drawn and displayed according to the layout styles of all the interface elements in the zoomed-in interface in the subsequent process, so that all the interface elements can be displayed more coordinated in the zoomed-in interface, thereby better improving the level of detail of the interface display of the electronic device and enhancing the display effect of the electronic device.

In some embodiments, the display method further includes:
in response to detecting a zoom-out display instruction for the zoomed-in interface, based on the layout styles of all the interface elements in the zoomed-in interface, zooming out and displaying the zoomed-in interface according to a preset zoom-out ratio associated with the zoom-out display instruction.

In an embodiment of the present disclosure, when detecting the zoom-out display instruction for the zoomed-in interface, the electronic device can, based on the layout styles of all the interface elements in the zoomed-in interface, zoom out and display the zoomed-in interface according to the preset zoom-out ratio associated with the zoom-out display instruction, so as to zoom out the zoomed-in interface.

Here, the zoom-out display instruction may be a voice instruction or a manual operation instruction received by the electronic device, and may be used to indicate that the zoomed-in interface of the electronic device needs to be zoomed out and displayed.

It should be understood that when the zoomed-in interface needs to be zoomed out and displayed, based on the layout styles of all the interface elements in the zoomed-in interface, the zoomed-in interface can be proportionally zoomed out and displayed according to the preset zoom-out ratio.

It should be noted that the preset zoom-out ratio may be a ratio parameter carried in the zoom-out display instruction, or may be a ratio parameter associated with the zoom-out display instruction determined by the electronic device from the preset ratio library according to the detected zoom-out display instruction.

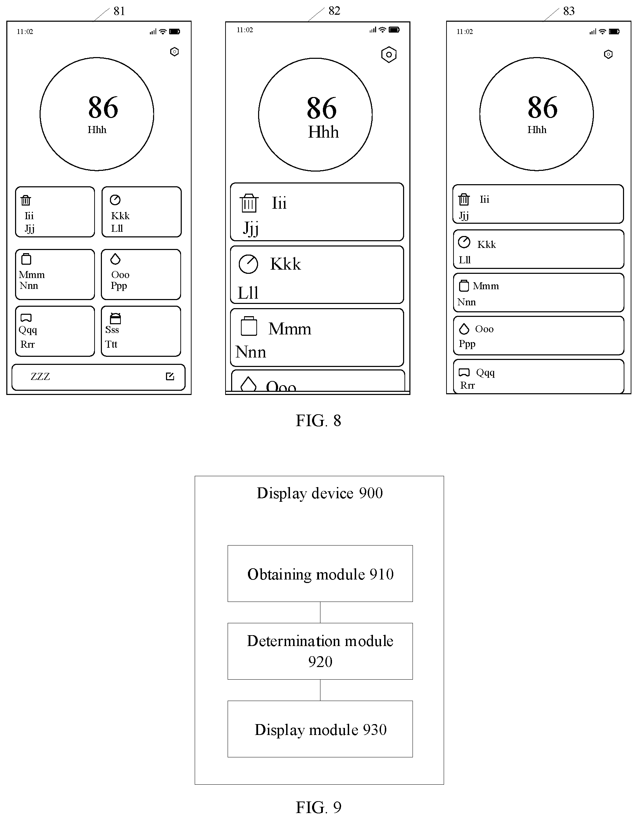

For example, as shown in FIG. 8, 81 indicates an interface layout displayed in a traditional electronic device, 82 indicates a layout of the zoomed-in interface displayed in the electronic device of embodiments of the present disclosure, and 83 indicates a layout of the zoomed-in interface after being zoomed out in the electronic device of embodiments of the present disclosure. It can be seen that the layout manner of the zoomed-in interface in embodiments of the present disclosure is the same as the layout manner after the zoomed-in interface is zoomed out, and all the interface elements can be displayed more coordinated in both the zoomed-in interface and the zoomed-out interface to improve the display effect of the electronic device.

In an embodiment of the present disclosure, when the zoom-out display instruction for the zoomed-in interface is detected, based on the layout styles of all the interface elements in the zoomed-in interface, the zoomed-in interface can be zoomed out and displayed according to the preset zoom-out ratio associated with the zoom-out display instruction, thereby making the layout styles in the zoomed-in interface and the zoomed-out interface more unified, to improve the efficiency of switching the display layout of the electronic device.

FIG. 9 shows a structural block diagram of a display device according to an embodiment of the present disclosure. Referring to FIG. 9, the display device 900 provided in an embodiment of the present disclosure is applied to an electronic device and may include: an obtaining module 910, a determination module 920 and a display module 930.

The obtaining module 910 is configured to obtain an element type of an interface element included in an initial interface to be zoomed in and displayed, in response to detecting a zoom-in display instruction.

The determination module 920 is configured to, for each interface element, determine a layout style of the interface element in a zoomed-in interface based on the element type of the interface element, wherein the layout style includes a display style and/or a display position of the interface element in the zoomed-in interface.

The display module 930 is configured to draw and display the zoomed-in interface based on layout styles of all interface elements in the zoomed-in interface.

The display device provided by embodiments of the present disclosure is different from the related art in which only the text part in the screen interface is enlarged. In the embodiments of the present disclosure, when the zoom-in display instruction is detected, the layout style of each interface element in the zoomed-in interface can be determined through the element type of each interface element in the initial interface to be zoomed in and displayed, so that the zoomed-in interface can be drawn and displayed according to the layout styles of all interface elements in the zoomed-in interface. On the one hand, the display of the zoomed-in interface can be made more harmonious, and on the other hand, all the interface elements can be displayed in the zoomed-in interface, that is, respective interface elements can be displayed more completely after the zoomed-in display, without omitting any interface element from the initial interface in the zoomed-in interface, thereby improving the level of detail of the interface display of the electronic device and improving the display effect of the electronic device to enhance the user experience.

For the technical solution shown in FIG. 9, in an implementation, the determination module 920 is specifically configured to determine the layout style of the interface element in the zoomed-in interface based on the element type of the interface element and a layout style of the interface element in the initial interface, and a preset zoom-in ratio associated with the zoom-in display instruction.

For the technical solution shown in FIG. 9, in an implementation, the determination module 920 is further configured to: in response to the interface element being a navigation bar, and the navigation bar being located at bottom and in a vertical layout in the initial interface, enlarge text in the navigation bar in the zoomed-in interface based on the preset zoom-in ratio, and determine the first number of lines of the text in the navigation bar in the zoomed-in interface based on the preset zoom-in ratio, wherein the first number of lines is greater than or equal to the number of lines of the text in the navigation bar displayed in the initial interface; in response to the interface element being the navigation bar, and the navigation bar being located at the bottom and in a horizontal layout in the initial interface, enlarge the text in the navigation bar in the zoomed-in interface based on the preset zoom-in ratio, and determine the number of lines of the text in the navigation bar displayed in the zoomed-in interface to remain unchanged; and in response to the interface element being the navigation bar, and the navigation bar being located at a side of the initial interface, enlarge the navigation bar in the zoomed-in interface based on the preset zoom-in ratio.

For the technical solution shown in FIG. 9, in an implementation, the determination module 920 is further configured to: in response to the navigation bar being located at the bottom and in the vertical layout in the initial interface, determine a display height of the navigation bar in the zoomed-in interface based on the preset zoom-in ratio; and in response to the navigation bar being located at the bottom and in the horizontal layout in the initial interface, determine a spatial distance between respective functional options in the navigation bar based on the preset zoom-in ratio.

For the technical solution shown in FIG. 9, in an implementation, the determination module 920 is further configured to: in response to the interface element being a menu bar, and the menu bar being located at top or side of the initial interface, determine a display width of the menu bar in the zoomed-in interface based on the preset zoom-in ratio, and determine the second number of lines of text in the menu bar in the zoomed-in interface based on the preset zoom-in ratio, wherein the second number of lines is greater than or equal to the number of lines of the text in the menu bar displayed in the initial interface.

For the technical solution shown in FIG. 9, in an implementation, the determination module 920 is further configured to: in response to the interface element being a toolbar, and the toolbar being in a vertical layout in the initial interface, enlarge text in the toolbar in the zoomed-in interface based on the preset zoom-in ratio, and determine the third number of lines of the text in the toolbar in the zoomed-in interface based on the preset zoom-in ratio, wherein the third number of lines is greater than or equal to the number of lines of the text in the toolbar displayed in the initial interface.

For the technical solution shown in FIG. 9, in an implementation, the determination module 920 is further configured to: in response to the interface element being a title bar, enlarge text in the title bar in the zoomed-in interface based on a layout style of the title bar in the initial interface and the preset zoom-in ratio; and based on the preset zoom-in ratio, determine distances between the text in the title bar and upper and lower borders of the title bar in the zoomed-in interface, and determine the fourth number of lines of the text in the title bar in the zoomed-in interface, wherein the fourth number of lines is greater than or equal to the number of lines of the text in the title bar displayed in the initial interface.

For the technical solution shown in FIG. 9, in an implementation, the determination module 920 is further configured to: in response to the interface element being a pop-up window, enlarge text in the pop-up window in the zoomed-in interface based on a layout style of the pop-up window in the initial interface and the preset zoom-in ratio; and based on the preset zoom-in ratio, enlarge an operation button in the pop-up window in a vertical layout in the zoomed-in interface, and determine the fifth number of lines of the text in the pop-up window in the zoomed-in interface, wherein the fifth number of lines is greater than or equal to the number of lines of the text in the pop-up window displayed in the initial interface.

For the technical solution shown in FIG. 9, in an implementation, the determination module 920 is further configured to: in response to the interface element being a progress bar, enlarge text in the progress bar in the zoomed-in interface based on a layout style of the progress bar in the initial interface and the preset zoom-in ratio, and determine the sixth number of lines of the text in the progress bar in the zoomed-in interface based on the preset zoom-in ratio, wherein the sixth number of lines is greater than or equal to the number of lines of the text in the progress bar displayed in the initial interface.

For the technical solution shown in FIG. 9, in an implementation, the determination module 920 is further configured to: in response to the interface element being an option box, enlarge the option box in the zoomed-in interface based on a layout style of the option box in the initial interface, a dimension of the option box and the preset zoom-in ratio, wherein the dimension of the option box is configured to represent the number of available options in the option box.

For the technical solution shown in FIG. 9, in an implementation, the determination module 920 is further configured to: in response to the dimension of the option box being a first preset dimension, enlarge a unit corresponding to an option in the option box in the zoomed-in interface based on the preset zoom-in ratio, and determine a font size of the option in the option box to remain unchanged; in response to the dimension of the option box being less than or equal to a second preset dimension, determine not to display, in the zoomed-in interface, the unit corresponding to the option in the option box, or, enlarge, at top of the zoomed-in interface, the unit corresponding to the option in the option box based on the preset zoom-in ratio; and in response to the dimension of the option box being greater than the second preset dimension, determine not to display, in the zoomed-in interface, the unit corresponding to the option in the option box, or, determine to split the option box into a plurality of selectors in the zoomed-in interface, and enlarge, at top of the corresponding plurality of selectors, the unit corresponding to the option in the option box based on the preset zoom-in ratio, respectively, wherein the second preset dimension is greater than the first preset dimension.

For the technical solution shown in FIG. 9, in an implementation, the determination module 920 is further configured to: in response to the interface element being an input box, enlarge the input box in the zoomed-in interface based on a layout style of the input box in the initial interface and the preset zoom-in ratio, and determine the seventh number of lines of text in the input box in the zoomed-in interface based on the preset zoom-in ratio, wherein the seventh number of lines is greater than or equal to the number of lines of the text in the input box displayed in the initial interface.

For the technical solution shown in FIG. 9, in an implementation, the determination module 920 is specifically configured to: in response to the interface element being a control element, determine a layout style of the control element in the zoomed-in interface based on a control type of the control element.

For the technical solution shown in FIG. 9, in an implementation, the determination module 920 is further configured to: in response to the control type being a type including text, enlarge the control element in the zoomed-in interface based on a preset zoom-in ratio associated with the zoom-in display instruction, and determine the eighth number of lines of the text in the control element in the zoomed-in interface based on the preset zoom-in ratio, wherein the eighth number of lines is greater than the number of lines of the text in the control element displayed in the initial interface; and in response to the control type being a type that does not include the text, determine a display style of the control element to remain unchanged in the zoomed-in interface.

For the technical solution shown in FIG. 9, in an implementation, the obtaining module 910 is further configured to obtain an area type of an area to which the interface element belongs in the initial interface, and the determination module 920 is specifically configured to determine the layout style of the interface element in the zoomed-in interface based on the element type and the area type of the interface element.

For the technical solution shown in FIG. 9, in an implementation, the determination module 920 is further configured to determine the layout style of the interface element in the zoomed-in interface based on the element type and the area type of the interface element and a preset area combination strategy associated with the area type.

For the technical solution shown in FIG. 9, in an implementation, the determination module 920 is further configured to: in response to an area type of a current interface element being a header area, and the preset area combination strategy indicating a combination of an interface element corresponding to the header area and an interface element corresponding to an area type other than the header area, determine, based on an element type of the current interface element and an element type of the interface element corresponding to the area type other than the header area, a display position of a combined display of the interface element corresponding to the header area and the interface element corresponding to the area type other than the header area in the zoomed-in interface.

For the technical solution shown in FIG. 9, in an implementation, the determination module 920 is further configured to: in response to the header area being a thumbnail, and the area type other than the header area including a fixed-single-line title area, display the interface element corresponding to the header area and an interface element corresponding to an area type other than the fixed-single-line title area and the header area in combination in the zoomed-in interface with the header area in a left-aligned manner; and in response to the header area being the thumbnail and the area type other than the header area including a non-fixed-single-line title area, or the header area being a non-thumbnail, a control or a serial number, display interface elements corresponding to area types other than the header area in combination in the zoomed-in interface with the non-fixed-single-line title area in the left-aligned manner, and determine a display position of the header area to remain unchanged in the zoomed-in interface.

For the technical solution shown in FIG. 9, in an implementation, the determination module 920 is further configured to: in response to an area type of a current interface element being a content area, and the content area being a text element, enlarge the text element in the zoomed-in interface based on a preset zoom-in ratio associated with the zoom-in display instruction, and determine the ninth number of lines of the text element in the zoomed-in interface, wherein the ninth number of lines is greater than the number of lines of the text element displayed in the initial interface; and in response to the area type of the current interface element being the content area, and the content area being an image-text composite element, enlarge, based on the preset zoom-in ratio, an image and text in the image-text composite element in a horizontal layout in the zoomed-in interface, and determine the image in the image-text composite element to be centered vertically in the zoomed-in interface.

For the technical solution shown in FIG. 9, in an implementation, the determination module 920 is further configured to: in response to an area type of a current interface element being a footer area, and the footer area being a single-graphic type or a text button type, determine a display position of the footer area to remain unchanged in the zoomed-in interface; in response to the area type of the current interface element being the footer area, and the footer area being a multi-graphic type or an illustrated type, determine the footer area to display at bottom of the zoomed-in interface; and in response to the area type of the current interface element being the footer area, and the footer area being an image-text composite type, determine a display position of an image in the footer area to remain unchanged in the zoomed-in interface, and determine text in the footer area to display at the bottom of the zoomed-in interface.

For the technical solution shown in FIG. 9, in an implementation, the display module 930 is further configured to: in response to detecting a zoom-out display instruction for the zoomed-in interface, based on the layout styles of all the interface elements in the zoomed-in interface, zoom out and display the zoomed-in interface according to a preset zoom-out ratio associated with the zoom-out display instruction.

It should be noted that the display device provided in embodiments of the present disclosure corresponds to the display method mentioned above. The relevant contents can refer to the description of the display method above, which will not be repeated here.

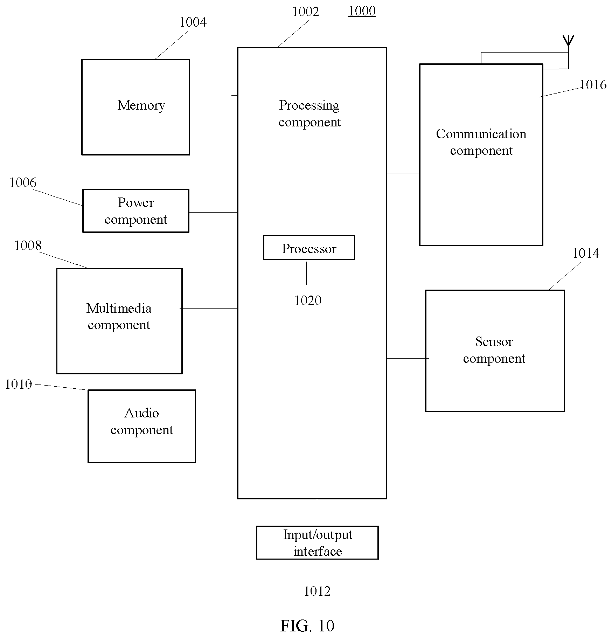

FIG. 10 shows a schematic structural diagram of an electronic device according to an embodiment of the present disclosure. For example, the electronic device 1000 may be a mobile phone, a computer, a digital broadcast terminal, a messaging device, a gaming console, a tablet, a medical device, exercise equipment, a personal digital assistant, etc.

Referring to FIG. 10, the electronic device 1000 may include one or more of the following components: a processing component 1002, a memory 1004, a power component 1006, a multimedia component 1008, an audio component 1010, an input/output (I/O) interface 112, a sensor component 1014, and a communication component 1016.

The processing component 1002 typically controls overall operations of the electronic device 1000, such as at least one of the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the electronic device 1000. Examples of such data include at least one of instructions for any applications or methods operated on the electronic device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the electronic device 1000. The power component 1006 may include at least one of a power management system, one or more power sources, and any other components associated with the generation, management, and distribution of power in the electronic device 1000.

The multimedia component 1008 includes a screen providing an output interface between the electronic device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a duration and a pressure associated with the touch or swipe action. In some embodiments, the multimedia component 1008 includes a front camera and/or a rear camera. The front camera and the rear camera may receive an external multimedia datum while the E electronic device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the electronic device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the electronic device 1000. For instance, the sensor component 1014 may detect an open/closed status of the electronic device 1000, relative positioning of components, e.g., the display and the keypad, of the electronic device 1000, a change in position of the electronic device 1000 or a component of the electronic device 1000, a presence or absence of user contact with the electronic device 1000, an orientation or an acceleration/deceleration of the electronic device 1000, and a change in temperature of the electronic device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include at least one of, but not limited to, an accelerometer sensor, a gyroscope sensor, a magnetic sensor, a pressure sensor, or a temperature sensor.

The communication component 1016 is configured to facilitate communication, wired or wirelessly, between the electronic device 1000 and other devices. The electronic device 1000 can access a wireless network based on a communication standard, such as Wi-Fi, 4G, or 5G, or a combination thereof. In one embodiment, the communication component 1016 receives a broadcast signal or broadcast associated information from an external broadcast management system via a broadcast channel. In one embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments of the present disclosure, the electronic device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components.

In embodiments of the present disclosure, there is further provided a non-transitory computer readable storage medium including instructions, such as the memory including executable instructions or computer programs which are executable by the processor in the electronic device to complete the display method. For example, the non-transitory computer-readable storage medium may be a ROM, a Random Access Memory (RAM), a CD-ROM, a magnetic tape, a floppy disc, an optical data storage device, and the like.

Embodiments of the present disclosure provide a non-temporary computer-readable storage medium. Instructions in the storage medium, when executed by a processor of an electronic device, enable the electronic device to execute any one of the display methods in the above embodiments. For example, the display method includes: in response to detecting a zoom-in display instruction, obtaining an element type of an interface element included in an initial interface to be zoomed in and displayed; for each interface element, determining a layout style of the interface element in a zoomed-in interface based on the element type of the interface element, wherein the layout style includes a display style and/or a display position of the interface element in the zoomed-in interface; and drawing and displaying the zoomed-in interface based on layout styles of all interface elements in the zoomed-in interface.

Embodiments of the present disclosure provide a computer program product, which includes: a computer program or executable instructions stored in a computer-readable storage medium. A processor of a computer device reads the computer program or the executable instructions from the computer-readable storage medium, and the processor executes the computer program or the executable instructions, so that the computer device executes any one of the display methods in the above embodiments.

The present application is intended to cover any variations, uses, or adaptations of the present disclosure, which are in accordance with the general principles of the present disclosure and include common general knowledge or traditional technical means in the art that are not disclosed in the present disclosure. The specification and embodiments are illustrative, and the real scope of the present disclosure is defined by the claims.

## Claims

1. A display method, comprising:
in response to detecting a zoom-in display instruction, obtaining (S110) an element type of an interface element comprised in an initial interface to be zoomed in and displayed;
determining (S120) a layout style of the interface element in a zoomed-in interface based on the element type of the interface element, wherein the layout style comprises at least one of a display style or a display position of the interface element in the zoomed-in interface; and
displaying (S130) the zoomed-in interface based on layout styles of all interface elements in the zoomed-in interface.

2. The method according to claim 1, wherein determining (S120) the layout style of the interface element in the zoomed-in interface based on the element type of the interface element comprises:
determining the layout style of the interface element in the zoomed-in interface based on the element type of the interface element and a layout style of the interface element in the initial interface, and a preset zoom-in ratio associated with the zoom-in display instruction.

3. The method according to claim 2, wherein determining the layout style of the interface element in the zoomed-in interface based on the element type of the interface element and the layout style of the interface element in the initial interface, and the preset zoom-in ratio associated with the zoom-in display instruction comprises:
in response to the interface element being a navigation bar, and the navigation bar being located at bottom and in a vertical layout in the initial interface, enlarging text in the navigation bar in the zoomed-in interface based on the preset zoom-in ratio, and determining the first number of lines of the text in the navigation bar in the zoomed-in interface based on the preset zoom-in ratio, wherein the first number of lines is greater than or equal to the number of lines of the text in the navigation bar displayed in the initial interface;
in response to the interface element being the navigation bar, and the navigation bar being located at the bottom and in a horizontal layout in the initial interface, enlarging the text in the navigation bar in the zoomed-in interface based on the preset zoom-in ratio, and determining the number of lines of the text in the navigation bar to remain unchanged in the zoomed-in interface; and
in response to the interface element being the navigation bar, and the navigation bar being located at a side of the initial interface, enlarging the navigation bar in the zoomed-in interface based on the preset zoom-in ratio.

4. The method according to claim 3, wherein the method further comprises:
in response to the navigation bar being located at the bottom and in the vertical layout in the initial interface, determining a display height of the navigation bar in the zoomed-in interface based on the preset zoom-in ratio; and
in response to the navigation bar being located at the bottom and in the horizontal layout in the initial interface, determining a spatial distance between respective functional options in the navigation bar based on the preset zoom-in ratio.

5. The method according to claim 2, wherein determining the layout style of the interface element in the zoomed-in interface based on the element type of the interface element and the layout style of the interface element in the initial interface, and the preset zoom-in ratio associated with the zoom-in display instruction comprises:
in response to the interface element being a menu bar, and the menu bar being located at top or side of the initial interface, determining a display width of the menu bar in the zoomed-in interface based on the preset zoom-in ratio, and determining the second number of lines of text in the menu bar in the zoomed-in interface based on the preset zoom-in ratio, wherein the second number of lines is greater than or equal to the number of lines of the text in the menu bar displayed in the initial interface; or
wherein determining the layout style of the interface element in the zoomed-in interface based on the element type of the interface element and the layout style of the interface element in the initial interface, and the preset zoom-in ratio associated with the zoom-in display instruction comprises:
in response to the interface element being a toolbar, and the toolbar being in a vertical layout in the initial interface, enlarging text in the toolbar in the zoomed-in interface based on the preset zoom-in ratio, and determining the third number of lines of the text in the toolbar in the zoomed-in interface based on the preset zoom-in ratio, wherein the third number of lines is greater than or equal to the number of lines of the text in the toolbar displayed in the initial interface; or
wherein determining the layout style of the interface element in the zoomed-in interface based on the element type of the interface element and the layout style of the interface element in the initial interface, and the preset zoom-in ratio associated with the zoom-in display instruction comprises:
in response to the interface element being a title bar, enlarging text in the title bar in the zoomed-in interface based on a layout style of the title bar in the initial interface and the preset zoom-in ratio; and
based on the preset zoom-in ratio, determining distances between the text in the title bar and upper and lower borders of the title bar in the zoomed-in interface, and determining the fourth number of lines of the text in the title bar in the zoomed-in interface, wherein the fourth number of lines is greater than or equal to the number of lines of the text in the title bar displayed in the initial interface; or
wherein determining the layout style of the interface element in the zoomed-in interface based on the element type of the interface element and the layout style of the interface element in the initial interface, and the preset zoom-in ratio associated with the zoom-in display instruction comprises:
in response to the interface element being a pop-up window, enlarging text in the pop-up window in the zoomed-in interface based on a layout style of the pop-up window in the initial interface and the preset zoom-in ratio; and
based on the preset zoom-in ratio, enlarging an operation button in the pop-up window in a vertical layout in the zoomed-in interface, and determining the fifth number of lines of the text in the pop-up window in the zoomed-in interface, wherein the fifth number of lines is greater than or equal to the number of lines of the text in the pop-up window displayed in the initial interface; or
wherein determining the layout style of the interface element in the zoomed-in interface based on the element type of the interface element and the layout style of the interface element in the initial interface, and the preset zoom-in ratio associated with the zoom-in display instruction comprises:
in response to the interface element being a progress bar, enlarging text in the progress bar in the zoomed-in interface based on a layout style of the progress bar in the initial interface and the preset zoom-in ratio, and determining the sixth number of lines of the text in the progress bar in the zoomed-in interface based on the preset zoom-in ratio, wherein the sixth number of lines is greater than or equal to the number of lines of the text in the progress bar displayed in the initial interface.

6. The method according to claim 2, wherein determining the layout style of the interface element in the zoomed-in interface based on the element type of the interface element and the layout style of the interface element in the initial interface, and the preset zoom-in ratio associated with the zoom-in display instruction comprises:
in response to the interface element being an option box, enlarging the option box in the zoomed-in interface based on a layout style of the option box in the initial interface, a dimension of the option box and the preset zoom-in ratio, wherein the dimension of the option box is configured to represent the number of available options in the option box.

7. The method according to claim 6, wherein enlarging the option box in the zoomed-in interface based on the layout style of the option box in the initial interface, the dimension of the option box and the preset zoom-in ratio comprises:
in response to the dimension of the option box being a first preset dimension, enlarging a unit corresponding to an option in the option box in the zoomed-in interface based on the preset zoom-in ratio, and determining a font size of the option in the option box to remain unchanged;
in response to the dimension of the option box being less than or equal to a second preset dimension, determining not to display, in the zoomed-in interface, the unit corresponding to the option in the option box, or, enlarging, at top of the zoomed-in interface, the unit corresponding to the option in the option box based on the preset zoom-in ratio; and
in response to the dimension of the option box being greater than the second preset dimension, determining not to display, in the zoomed-in interface, the unit corresponding to the option in the option box, or, determining to split the option box into a plurality of selectors in the zoomed-in interface, and enlarging, at top of the corresponding plurality of selectors, the unit corresponding to the option in the option box based on the preset zoom-in ratio, respectively, wherein the second preset dimension is greater than the first preset dimension.

8. The method according to claim 2, wherein determining the layout style of the interface element in the zoomed-in interface based on the element type of the interface element and the layout style of the interface element in the initial interface, and the preset zoom-in ratio associated with the zoom-in display instruction comprises:
in response to the interface element being an input box, enlarging the input box in the zoomed-in interface based on a layout style of the input box in the initial interface and the preset zoom-in ratio, and determining the seventh number of lines of text in the input box in the zoomed-in interface based on the preset zoom-in ratio, wherein the seventh number of lines is greater than or equal to the number of lines of the text in the input box displayed in the initial interface.

9. The method according to any one of claims 1 to 8, wherein determining the layout style of the interface element in the zoomed-in interface based on the element type of the interface element comprises:
in response to the interface element being a control element, determining a layout style of the control element in the zoomed-in interface based on a control type of the control element; and
wherein determining the layout style of the control element in the zoomed-in interface based on the control type of the control element, comprises:
in response to the control type being a type comprising text, enlarging the control element in the zoomed-in interface based on a preset zoom-in ratio associated with the zoom-in display instruction, and determining the eighth number of lines of the text in the control element in the zoomed-in interface based on the preset zoom-in ratio, wherein the eighth number of lines is greater than the number of lines of the text in the control element displayed in the initial interface; and
in response to the control type being a type that does not comprise the text, determining a display style of the control element to remain unchanged in the zoomed-in interface.

10. The method according to any one of claims 1 to 9, wherein the method further comprises:
obtaining an area type of an area to which the interface element belongs in the initial interface; and
determining the layout style of the interface element in the zoomed-in interface based on the element type of the interface element comprises:
determining the layout style of the interface element in the zoomed-in interface based on the element type and the area type of the interface element.

11. The method according to claim 10, wherein determining the layout style of the interface element in the zoomed-in interface based on the element type and the area type of the interface element comprises:
determining the layout style of the interface element in the zoomed-in interface based on the element type and the area type of the interface element and a preset area combination strategy associated with the area type; and
wherein determining the layout style of the interface element in the zoomed-in interface based on the element type and the area type of the interface element and the preset area combination strategy associated with the area type comprises:
in response to an area type of a current interface element being a header area, and the preset area combination strategy indicating a combination of an interface element corresponding to the header area and an interface element corresponding to an area type other than the header area, determining, based on an element type of the current interface element and an element type of the interface element corresponding to the area type other than the header area, a display position of a combined display of the interface element corresponding to the header area and the interface element corresponding to the area type other than the header area in the zoomed-in interface.

12. The method according to claim 11, wherein determining, based on the element type of the current interface element and the element type of the interface element corresponding to the area type other than the header area, the display position of the combined display of the interface element corresponding to the header area and the interface element corresponding to the area type other than the header area in the zoomed-in interface comprises:
in response to the header area being a thumbnail, and the area type other than the header area comprising a fixed-single-line title area, displaying the interface element corresponding to the header area and an interface element corresponding to an area type other than the fixed-single-line title area and the header area in combination in the zoomed-in interface with the header area in a left-aligned manner; and
in response to the header area being the thumbnail and the area type other than the header area comprising a non-fixed-single-line title area, or the header area being a non-thumbnail, a control or a serial number, displaying interface elements corresponding to area types other than the header area in combination in the zoomed-in interface with the non-fixed-single-line title area in the left-aligned manner, and determining a display position of the header area to remain unchanged in the zoomed-in interface.

13. The method according to claim 10, wherein determining the layout style of the interface element in the zoomed-in interface based on the element type and the area type of the interface element comprises:
in response to an area type of a current interface element being a content area, and the content area being a text element, enlarging the text element in the zoomed-in interface based on a preset zoom-in ratio associated with the zoom-in display instruction, and determining the ninth number of lines of the text element in the zoomed-in interface, wherein the ninth number of lines is greater than the number of lines of the text element displayed in the initial interface; and
in response to the area type of the current interface element being the content area, and the content area being an image-text composite element, enlarging, based on the preset zoom-in ratio, an image and text in the image-text composite element in a horizontal layout in the zoomed-in interface, and determining the image in the image-text composite element to be centered vertically in the zoomed-in interface; or
wherein determining the layout style of the interface element in the zoomed-in interface based on the element type and the area type of the interface element comprises:
in response to an area type of a current interface element being a footer area, and the footer area being a single-graphic type or a text button type, determining a display position of the footer area to remain unchanged in the zoomed-in interface;
in response to the area type of the current interface element being the footer area, and the footer area being a multi-graphic type or an illustrated type, determining the footer area to display at bottom of the zoomed-in interface; and
in response to the area type of the current interface element being the footer area, and the footer area being an image-text composite type, determining a display position of an image in the footer area to remain unchanged in the zoomed-in interface, and determining text in the footer area to display at the bottom of the zoomed-in interface.

14. An electronic device, comprising:
a processor; and
a memory configured to store a computer program or instructions;
wherein the processor executes the computer program or the instructions to implement steps of the method according to any one of claims 1 to 13.

15. A non-transitory computer-readable storage medium having a computer program or instructions stored thereon, wherein the computer program or the instructions in the storage medium, when executed by a processor, implements steps of the method according to any one of claims 1 to 13.
